# EUROPEAN PATENT APPLICATION

(11) **EP 4 653 983 A1**
(43) Date of publication of application: **26.11.2025**
(21) Application number: 25716965.6
(22) Date of filing: 26.02.2025
(51) Int. Cl.: G06F 1/16

(54) **ELECTRONIC DEVICE COMPRISING HINGE ASSEMBLY**

(30) Priority: 03.04.2024 KR 20240045247; 17.05.2024 KR 20240064376
(71) Applicant: SAMSUNG ELECTRONICS CO., LTD., Yeongtong-gu Suwon-si, Gyeonggi-do 16677 (KR)
(72) Inventor: YUN, Sunpyo, Suwon-si Gyeonggi-do 16677 (KR)
(74) Representative: Gulde & Partner
(86) International application number: PCT/KR2025/002636
(87) International publication number: WO 2025/211587

(57) **Abstract**

An electronic device may include a housing structure including a first housing portion and a second housing portion, a hinge assembly operable between a folded state and an unfolded state relative to a folding axis, a connecting body disposed on at least one of the first housing portion and the second housing portion, and a hinge housing including a protruding region provided at a position facing the connecting body, in the unfolded state, in which the hinge assembly is partially disposed, wherein the connecting body overlaps the protruding region in the unfolded state, when viewed in a direction of the folding axis. Various other embodiments are also possible.

## Description

### BACKGROUND

### 1. Field

Various embodiments of the present disclosure relate to an electronic device including a hinge assembly.

### 2. Description of Related Art

The development of display-related technologies has accelerated the development of electronic devices with flexible displays. A flexible display may be used in a specific form into which it may be transformed, in addition to being used in a flat form. For example, an electronic device including such a flexible display may be implemented in a foldable form that is unfolded or folded about at least one folding axis.

However, the foregoing may be provided as background art (or related art) only for the purpose of enhancing the understanding of this disclosure, and none of the foregoing may be claimed as prior art with respect to the disclosure or used to determine prior art.

### SUMMARY

According to an embodiment, an electronic device may include: a housing structure including a first housing portion and a second housing portion; a hinge assembly connecting the first housing portion and the second housing portion, and configured to be operable between a folded state in which the first housing portion and the second housing portion face each other relative to a folding axis and an unfolded state in which the first housing portion and the second housing portion do not face each other; a first connecting body disposed on at least one of the first housing portion and the second housing portion; and a hinge housing in which the hinge assembly is partially disposed, including a first protruding region provided at a position facing the first connecting body, in the unfolded state. In one embodiment, when viewed in a direction of the folding axis, the first connecting body may be spaced apart from the first protruding region in the folded state and may overlap the first protruding region in the unfolded state.

According to an embodiment, an electronic device may include: a housing structure including a first housing portion and a second housing portion; a hinge assembly connecting the first housing portion and the second housing portion, and configured to be operable between a folded state in which the first housing portion and the second housing portion face each other along a folding axis and an unfolded state in which the first housing portion and the second housing portion do not face each other; a plurality of connecting bodies including a first connecting body disposed on the first housing portion and a second connecting body disposed on the second housing portion; and a hinge housing in which the hinge assembly is partially disposed, and including a plurality of protruding regions including a first protruding region provided at a position facing the first connecting body and a second protruding region provided at a position facing the second connecting body, in the unfolded state. In one embodiment, when viewed in a direction of the folding axis, the plurality of connecting bodies may be disposed overlappingly with the plurality of protruding regions, respectively, in the unfolded state, and may limit a movement of the housing structure.

### BRIEF DESCRIPTION OF THE DRAWINGS

The above and other aspects, features, and advantages will be more apparent from the following description, taken in conjunction with the accompanying drawings, in which:
FIG. 1 is a block diagram of an electronic device in a network environment according to an embodiment;
FIG. 2A is a diagram illustrating an electronic device in an unfolded state according to an embodiment;
FIG. 2B is a diagram illustrating an electronic device in a folded state according to an embodiment;
FIG. 3A is a diagram illustrating an electronic device in an unfolded state according to an embodiment;
FIG. 3B is a diagram illustrating an electronic device in a folded state according to an embodiment;
FIG. 4A is a top view of an electronic device according to an embodiment;
FIG. 4B is a perspective view of a partial configuration of an electronic device according to an embodiment;
FIG. 4C is a perspective view of a partial configuration of an electronic device according to an embodiment;
FIG. 4D is a perspective view of a partial configuration of an electronic device according to an embodiment;
FIG. 4E is a perspective view of a partial configuration of an electronic device according to an embodiment;
FIG. 5A is a cross-sectional view of an electronic device according to an embodiment;
FIG. 5B is a cross-sectional view of an electronic device according to an embodiment;
FIG. 5C is a cross-sectional view of an electronic device according to an embodiment;
FIG. 5D is a cross-sectional view of an electronic device according to an embodiment;
FIG. 5E is a cross-sectional view of an electronic device according to an embodiment;
FIG. 6A is a schematic diagram illustrating an electronic device in an impact state according to an embodiment;
FIG. 6B is a cross-sectional view of an electronic device according to an embodiment;
FIG. 7A is a perspective view of a partial configuration of an electronic device according to an embodiment;
FIG. 7B is a cross-sectional view of an electronic device according to an embodiment;
FIG. 8A is a perspective view of a partial configuration of an electronic device according to an embodiment;
FIG. 8B is a top view of an electronic device according to an embodiment; and
FIG. 8C is a cross-sectional view of an electronic device according to an embodiment.

### DETAILED DESCRIPTION

Hereinafter, embodiments will be described in detail with reference to the accompanying drawings. When describing the embodiments with reference to the accompanying drawings, like reference numerals refer to like components, and redundant and repetitious descriptions are omitted.

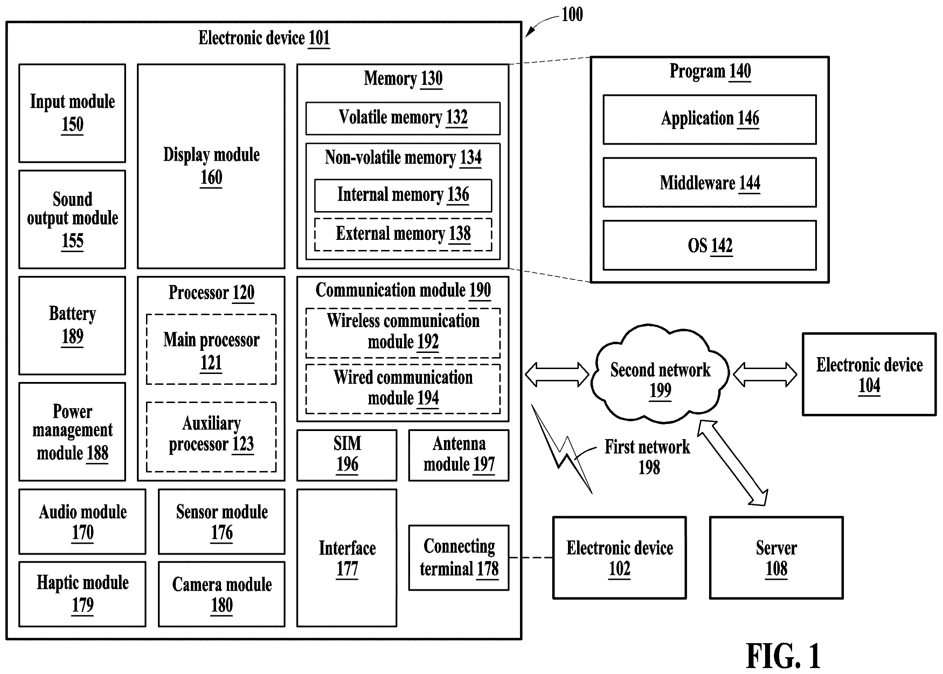

FIG. 1 is a block diagram of an electronic device 101 in a network environment 100 according to an embodiment.

Referring to FIG. 1, the electronic device 101 in the network environment 100 may be configured to communicate with an electronic device 102 via a first network 198 (e.g., a short-range wireless communication network), or communicate with at least one of an electronic device 104 or a server 108 via a second network 199 (e.g., a long-range wireless communication network).

In one embodiment, the electronic device 101 may be configured to communicate with the electronic device 104 via the server 108. In one embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197.

In one embodiment, at least one of the components (e.g., the connecting terminal 178) may be omitted from the electronic device 101, or one or more other components may be added in the electronic device 101.

In one embodiment, some of the components (e.g., the sensor module 176, the camera module 180, or the antenna module 197) may be implemented as a single component (e.g., integrated with the display module 160). The processor 120 may be configured to execute, for example, software (e.g., a program 140) to control at least one other component (e.g., a hardware or software component) of the electronic device 101 coupled with the processor 120, and may be configured to perform various data processing or computation.

In one embodiment, as at least part of the data processing or computation, the processor 120 may be configured to store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121.

For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an image signal processor or a communication processor) may be implemented as part of another component (e.g., the camera module 180 or the communication module 190) functionally related to the auxiliary processor 123. The auxiliary processor 123 (e.g., the neural processing unit) may include a hardware structure specified for artificial intelligence model processing. An artificial intelligence (AI) model may be generated by machine learning. Such learning may be performed, e.g., by the electronic device 101 where AI is performed, or via a separate server (e.g., the server 108). Learning algorithms may include, for example, supervised learning, unsupervised learning, semi-supervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The AI model may, additionally or alternatively, include a software structure different to, or as an alternative to the hardware structure.

The memory 130 may be configured to store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may be configured to receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may be configured to output sound signals to the outside of the electronic device 101. The sound output module 155 may include, for example, a speaker or a receiver. The speaker may be used for general purposes, such as, playing multimedia or playing a record. The receiver may be used for receiving incoming calls. The receiver may be implemented as separate from, or as part of the speaker.

The display module 160 may be configured to visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may be configured to convert a sound into an electrical signal and vice versa. The audio module 170 may obtain the sound via the input module 150 or output the sound via the sound output module 155 or an external electronic device (e.g., an electronic device 102 such as a speaker or a headphone) directly or wirelessly coupled with the electronic device 101.

The sensor module 176 may be configured to detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 177 may be configured to support one or more specified protocols to be used for the electronic device 101 to be coupled with the external electronic device (e.g., the electronic device 102) directly (e.g., via a wired connection) or wirelessly. The interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). The connecting terminal 178 may include, for example, an HDMI connector, a USB connector, an SD card connector, or an audio connector (e.g., a headphone connector).

The haptic module 179 may be configured to convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may be configured to capture a still image and a video. The camera module 180 may include one or more lenses, image sensors, image signal processors, or flashes.

The power management module 188 may be configured to manage power supplied to the electronic device 101. The power management module 188 may be implemented as at least part of, for example, a power management integrated circuit (PMIC).

The battery 189 may be configured to supply power to at least one component of the electronic device 101. The battery 189 may include, for example, a primary cell which is not rechargeable, a secondary cell which is rechargeable, or a fuel cell.

The communication module 190 may be configured to support establishment of a direct (e.g., wired) communication channel or a wireless communication channel between the electronic device 101 and the external electronic device (e.g., the electronic device 102, the electronic device 104, or the server 108) and perform communication via the established communication channel. The communication module 190 may include one or more communication processors that are operable independently from the processor 120 (e.g., the application processor) and support direct (e.g., wired) communication or wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may be configured to identify and authenticate the electronic device 101 in a communication network, such as the first network 198 or the second network 199, for example, using subscriber information (e.g., international mobile subscriber identity (IMSI)) stored in the subscriber identification module (SIM) 196.

The wireless communication module 192 may support a 5G network, that is a network developed after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO, an array antenna, analog beamforming, or a large-scale antenna. The wireless communication module 192 may be configured to support various requirements specified in the electronic device 101, an external electronic device (e.g., the electronic device 104), or a network system (e.g., the second network 199). The wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink and uplink, or a round trip of 1 ms or less) for implementing URLLC.

The antenna module 197 may be configured to transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. Another component (e.g., a radio frequency integrated circuit (RFIC)) other than the radiating element may be additionally formed as part of the antenna module 197.

For example, the antenna module 197 may include a mm Wave antenna module. The mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

In one embodiment, commands or data may be transmitted or received between the electronic device 101 and the external electronic device 104 via the server 108 coupled with the second network 199. Each of the external electronic devices 102 and 104 may be a device of the same type as, or a different type from, the electronic device 101. All or some of the operations to be executed at the electronic device 101 may be executed at one or more of the external electronic devices 102 and 104 or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing, or client-server computing technology may be used, for example. The electronic device 101 may provide ultra low-latency services using, e.g., distributed computing or mobile edge computing (MEC). In another embodiment, the external electronic device 104 may include an Internet-of-things (IoT) device. The server 108 may be an intelligent server using machine learning and/or a neural network. The external electronic device 104 or the server 108 may be included in the second network 199. The electronic device 101 may be applied to intelligent services (e.g., smart home, smart city, smart car, or healthcare) based on 5G communication technology or IoT-related technology.

It is to be understood that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B," "at least one of A and B," "at least one of A or B," "A, B, or C," "at least one of A, B, and C," and "at least one of A, B, or C," each of which may include any one of the items listed together in the corresponding one of the phrases, or all possible combinations thereof. Terms such as "first" and "second," or "initial" or "subsequent" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., by wire), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to various embodiments of the present disclosure, a method described herein may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

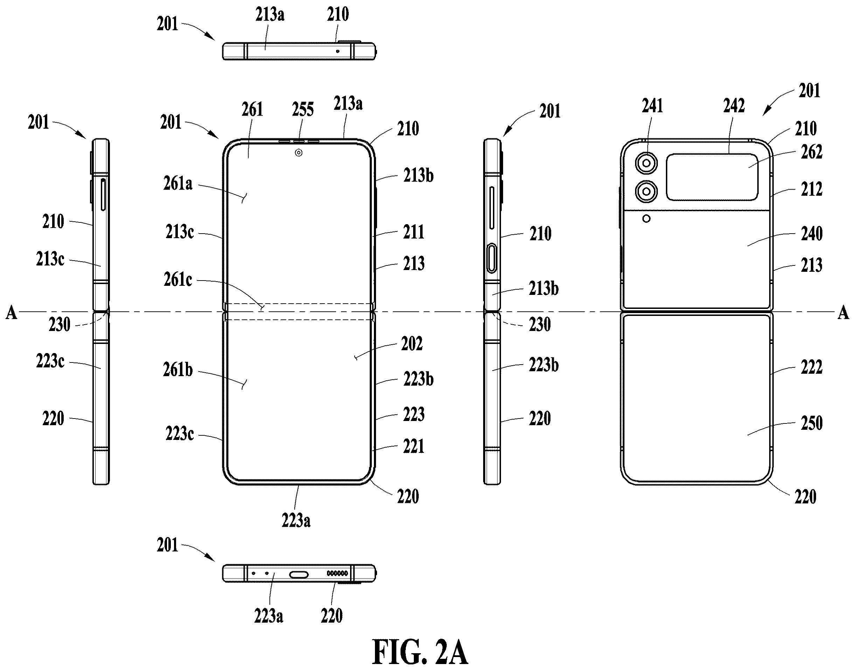

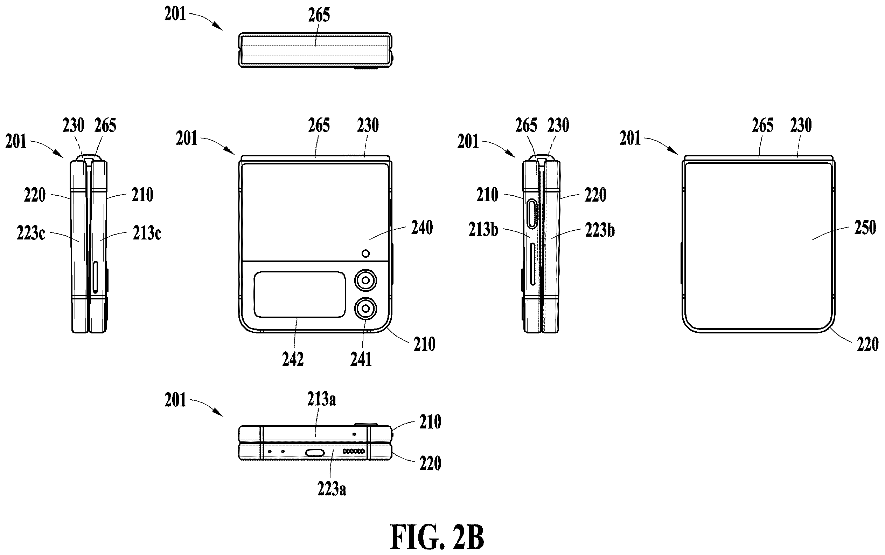

FIG. 2A is a diagram illustrating an electronic device 201 in an unfolded state according to an embodiment, and FIG. 2B is a diagram illustrating the electronic device 201 in a folded state according to an embodiment.

Referring to FIGS. 2A and 2B, according to one embodiment, an electronic device 201 (e.g., the electronic device 101 of FIG. 1) may include a housing structure, e.g., 210 and 220, that are rotatably coupled via a hinge structure to be folded relative to each other, a hinge housing 265 that covers a foldable portion of the housing structure (e.g., 210 and 220), and a display 261 (e.g., a flexible display or foldable display) (e.g., the display module 160 of FIG. 1) disposed in a space formed by the housing structure (e.g., 210 and 220).

Hereinafter, what has been described above is omitted, and it is to be noted that some configurations or components and structures may be substituted, added, or omitted in the electronic device 201 to the extent readily understood by those skilled in the art with reference to the accompanying drawings and the following description. It is also to be noted that at least one of the configurations or components and features described above according to the preceding embodiments may be combined in the electronic device 201, unless technically explicitly impossible.

In one embodiment, a surface on which the display 261 is disposed may be defined as a front surface of the foldable electronic device 201, and a surface opposite the front surface may be defined as a rear surface of the foldable electronic device 201. In addition, a surface enclosing a space between the front surface and the rear surface may be defined as a side surface of the foldable electronic device 201.

In one embodiment, the housing structure (e.g., 210 and 220) may include a first housing portion 210, a second housing portion 220, a first rear cover 240, and a second rear cover 250. The housing structure (e.g., 210 and 220) of the electronic device 201 may not be limited to the shape or the combination and/or coupling of components shown in FIGS. 2A and 2B, but may be implemented in another shape or by another combination and/or coupling of components.

In one embodiment, the first housing portion 210 and the second housing portion 220 may be disposed on both sides (e.g., top and bottom) based on a folding axis A, and may be substantially symmetrically disposed with respect to the folding axis A. In one embodiment, an angle or distance between the first housing portion 210 and the second housing portion 220 may vary depending on whether the electronic device 201 is in an unfolded state, a folded state, or an intermediate state.

However, the term "substantially" used herein may indicate the same level or degree, with tolerances or errors in typical manufacturing processes reflected therein. Alternatively, the term "substantially" may refer to a range including any one of +/-0.1%, +/-0.5%, +/-1%, +/-3%, +/-5%, +/-7%, +/-10%, +/-15%, and +/-20%, based on 0% which indicates the literal equivalence.

In one embodiment, the first housing portion 210 may be connected to the hinge assembly 230, in the unfolded state of the electronic device 201. The first housing portion 210 may include a first surface 211 disposed to face the front surface of the electronic device 201, a second surface 212 facing in an opposite direction of the first surface 211, and a first side portion 213 enclosing at least a portion of a space between the first surface 211 and the second surface 212. The first side portion 213 may include a first side surface 213a disposed substantially parallel to the folding axis A, a second side surface 213b extending from one end of the first side surface 213a in a direction substantially perpendicular to the folding axis A, and a third side surface 213c extending from the other end of the first side surface 213a in a direction substantially perpendicular to the folding axis A and substantially parallel to the second side surface 213b.

In one embodiment, the second housing portion 220 may be connected to the hinge assembly 230, in the unfolded state of the electronic device 201. The second housing portion 220 may include a third surface 221 disposed to face the front surface of the electronic device 201, a fourth surface 222 facing in an opposite direction of the third surface 221, and a second side portion 223 enclosing at least a portion of a space between the third surface 221 and the fourth surface 222. The second side portion 223 may include a fourth side surface 223a disposed substantially parallel to the folding axis A, a fifth side surface 223b extending from one end of the fourth side surface 223a in a direction substantially perpendicular to the folding axis A, and a sixth side surface 223c extending from the other end of the fourth side surface 223a in a direction substantially perpendicular to the folding axis A and substantially parallel to the fifth side surface 223b. The first surface 211 and the third surface 221 may face each other when the electronic device 201 is in the folded state.

In one embodiment, the electronic device 201 may include a recess-shaped receiving portion 202 that receives therein the display 261 through a structural coupling of the first housing portion 210 and the second housing portion 220. The receiving portion 202 may have substantially the same size as the display 261.

In one embodiment, at least a portion of the first housing portion 210 and the second housing portion 220 may be formed of a metallic or non-metallic material having any stiffness suitable for supporting the display 261.

In one embodiment, the electronic device 201 may include a sound output module 255 (e.g., the sound output module 155) disposed through at least a portion of the first surface 211.

In one embodiment, the first rear cover 240 may be disposed on the second surface 212 of the first housing portion 210 and may have substantially rectangular edges. At least a portion of the edges of the first rear cover 240 may be enclosed by the first housing portion 210. The second rear cover 250 may be disposed on the fourth surface 222 of the second housing portion 220 and may have substantially rectangular edges. At least a portion of the edges of the second rear cover 250 may be enclosed by the second housing portion 220.

In one embodiment, the first rear cover 240 and the second rear cover 250 may have a substantially symmetrical shape with respect to the folding axis A. In one embodiment, the first rear cover 240 and the second rear cover 250 may have different shapes. In one embodiment, the first housing portion 210 and the first rear cover 240 may be integrally formed, and the second housing portion 220 and the second rear cover 250 may be integrally formed.

In one embodiment, the first housing portion 210, the second housing portion 220, the first rear cover 240, and the second rear cover 250 may be coupled together to provide a space for various components (e.g., the processor 120, the antenna module 197, the sensor module 176, or the battery 189 of FIG. 1) of the electronic device 201 to be disposed.

In one embodiment, the rear surface of the electronic device 201 may have at least one component visually exposed. For example, the at least one component may be visually exposed through a first rear area 241 of the first rear cover 240. In this case, the component may include a proximity sensor, a rear camera module, and/or a flash. In one embodiment, at least a portion of a sub-display 262 may be visually exposed through a second rear area 242 of the first rear cover 240.

In one embodiment, the display 261 may be disposed in the receiving portion 202 formed by the housing structure (e.g., 210 and 220). For example, the display 261 may be disposed to occupy a substantially majority of the front surface of the electronic device 201. The front surface of the electronic device 201 may include an area where the display 261 is disposed, and a portion (e.g., an edge area) of the first housing portion 210 and a portion (e.g., an edge area) of the second housing portion 220 adjacent to the display 261.

In one embodiment, the rear surface of the electronic device 201 may include the first rear cover 240, a portion (e.g., an edge area) of the first housing portion 210 adjacent to the first rear cover 240, and a portion (e.g., an edge area) of the second housing portion 220 adjacent to the second rear cover 250.

In one embodiment, the display 261 may be a display in which at least some areas are capable of being transformed into a flat or curved surface. In one embodiment, the display 261 may include a folding area 261c, a first area 261a on a first side (e.g., top) relative to the folding area 261c, and a second area 261b on a second side (e.g., bottom) relative to the folding area 261c.

In one embodiment, the first area 261a may be located on the first surface 211 of the first housing portion 210, and the second area 261b may be located on the third surface 221 of the second housing portion 220. However, such an area division of the display 261 is merely an example, and the display 261 may be divided into a plurality of areas based on the structure or function of the display 261.

For example, as shown in FIG. 2A, the areas of the display 261 may be divided based on the folding area 261c or the folding axis A extending parallel to an X-axis, but the areas of the display 261 may also be divided based on another folding area (e.g., a folding area extending parallel to a Y-axis) or another folding axis (e.g., a folding axis parallel to the Y-axis). However, such an area division of the display 261 is only a physical division by the housing structure (e.g., 210 and 220) and the hinge assembly 230, and the display 261 may display substantially one screen by the housing structure (e.g., 210 and 220) and the hinge assembly 230. In one embodiment, the first area 261a and the second area 261b may have a substantially symmetrical shape relative to the folding area 261c.

In one embodiment, the hinge housing 265 may be disposed between the first housing portion 210 and the second housing portion 220 and may be configured to house or cover other components of the hinge assembly 230. The hinge housing 265 may be concealed by at least a portion of the first housing portion 210 and the second housing portion 220, or may be exposed to the outside, depending on an operational state of the electronic device 201.

For example, when the electronic device 201 is in the unfolded state as shown in FIG. 2A, the hinge housing 265 may be concealed by the first housing portion 210 and the second housing portion 220 and not be exposed to the outside, and when the electronic device 201 is in the folded state as shown in FIG. 2B, the hinge housing 265 may be exposed to the outside between the first housing portion 210 and the second housing portion 220. Also, when the electronic device 201 is in an intermediate state where the first housing portion 210 and the second housing portion 220 form an angle with each other, at least a portion of the hinge housing 265 may be exposed to the outside between the first housing portion 210 and the second housing portion 220. In this case, an area of the hinge housing 265 exposed to the outside may be smaller than an area of the hinge housing 265 exposed when the electronic device 201 is in the folded state. In one embodiment, the hinge housing 265 may have a curved surface.

Regarding the operations of the electronic device 201 according to one embodiment, when the electronic device 201 is in the unfolded state (e.g., the state of the electronic device 201 shown in FIG. 2A), the first housing portion 210 and the second housing portion 220 may form a first angle (e.g., about 180 degrees) with each other, and the first area 261a and the second area 261b of the display 261 may be oriented in substantially the same direction. The folding area 261c of the display 261 may be in substantially the same plane as the first area 261a and the second area 261b.

In one embodiment, when the electronic device 201 is in the unfolded state, the first housing portion 210 and the second housing portion 220 may be reversely folded such that the second surface 212 and the fourth surface 222 face each other as the first housing portion 210 is rotated by a second angle (e.g., about 360 degrees) with respect to the second housing portion 220. On the other hand, when the electronic device 201 is in the folded state (e.g., the state of the electronic device 201 shown in FIG. 2B), the first housing portion 210 and the second housing portion 220 may face each other.

In one embodiment, the first housing portion 210 and the second housing portion 220 may form an angle of about 0 degrees to about 10 degrees, and the first area 261a and the second area 261b of the display 261 may face each other. At least a portion of the folding area 261c of the display 261 may be transformed into a curved surface. On the other hand, when the electronic device 201 is in the intermediate state, the first housing portion 210 and the second housing portion 220 may form a certain angle with each other.

In one embodiment, an angle (e.g., a third angle, about 90 degrees) formed between the first area 261a and the second area 261b of the display 261 may be greater than an angle when the electronic device 201 is in the folded state and less than an angle when the electronic device 201 is in the unfolded state. At least a portion of the folding area 261c of the display 261 may be transformed into a curved surface. In this case, the curvature of the curved surface of the folding area 261c may be less than the curvature of the curved surface of the folding area 261c when the electronic device 201 is in the folded state.

In addition, various embodiments of an electronic device described herein are not limited to the electronic device 201 described with reference to FIGS. 2A and 2B, but may be applicable to electronic devices of various structures, shapes, purposes, and uses.

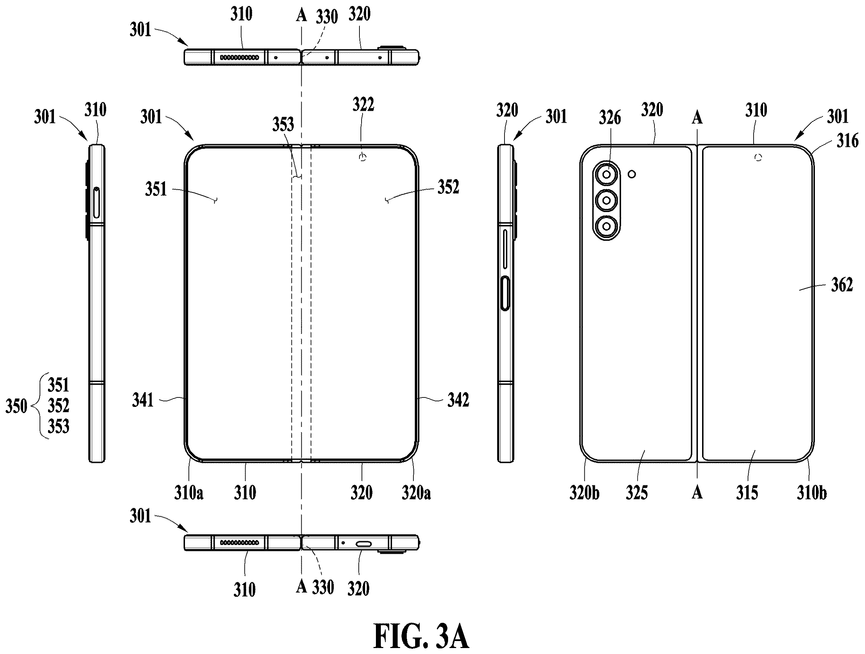

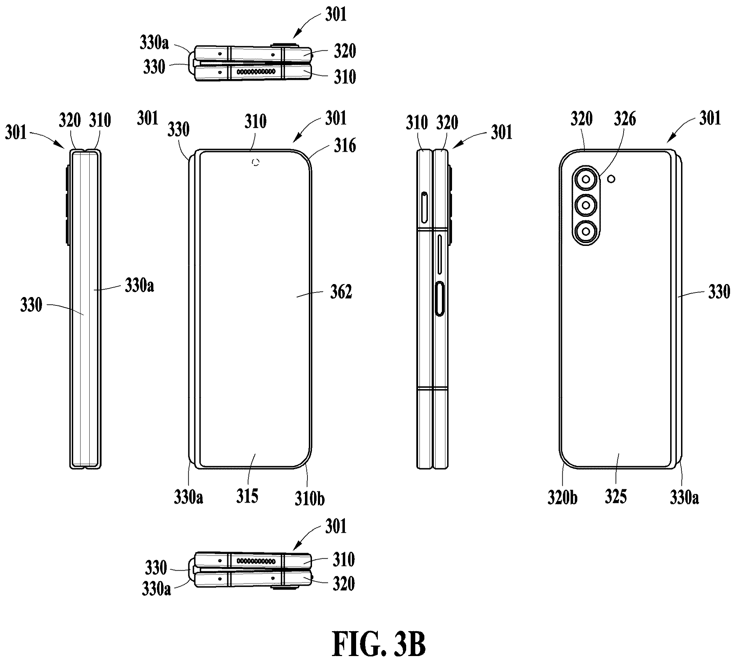

FIG. 3A is a diagram illustrating an electronic device 301 in an unfolded state according to an embodiment, and FIG. 3B is a diagram illustrating the electronic device 301 in a folded state according to an embodiment.

Referring to FIGS. 3A and 3B, according to one embodiment, the electronic device 301 (e.g., the electronic device 101 of FIG. 1) may include a housing structure (e.g., 310 and 320) that forms the exterior and houses components therein.

Hereinafter, what has been described above is omitted, and it is to be noted that some configurations or components and structures may be substituted, added, or omitted in the electronic device 301 to the extent readily understood by those skilled in the art with reference to the accompanying drawings and the following description. It is also to be noted that at least one of the configurations or components and features described above according to the preceding embodiments may be combined in the electronic device 301, unless technically explicitly impossible.

In one embodiment, the electronic device 301 may be a foldable or bendable electronic device. In one embodiment, the electronic device 301 may include the housing structure (e.g., 310 and 320) and/or a display 350 (e.g., the display module 160 of FIG. 1). The housing structure (e.g., 310 and 320) may form the exterior of the electronic device 301. In one embodiment, the housing structure (e.g., 310 and 320) may include a first housing portion 310 and a second housing portion 320.

In one embodiment, the display 350 may include a flexible or foldable display panel disposed within a space formed by the housing structure (e.g., 310 and 320). A surface on which the display 350 is disposed (or a surface on which the display 350 is visible from the outside of the electronic device 301) may be defined as a front surface of the electronic device 301. A surface opposite the front surface may be defined as a rear surface of the electronic device 301. In addition, a surface enclosing a space between the front surface and the rear surface may be defined as a side surface of the electronic device 301.

In one embodiment, the electronic device 301 may include a hinge assembly 330 that supports the housing structure (e.g., 310 and 320) to be foldable and a hinge housing 330a that covers a foldable portion of the housing structure (e.g., 310 and 320). However, the housing structure (e.g., 310 and 320) of the electronic device 301 may not be limited to the shape or the combination and/or coupling of components shown in FIGS. 3A and 3B, but may be implemented in another shape or by another combination and/or coupling of components.

In one embodiment, the first housing portion 310 may be connected to the hinge assembly 330 and may include a first surface 310a facing in a first direction and a second surface 310b facing in a second direction opposite the first direction. The second housing portion 320 may be connected to the hinge assembly 330 and may include a third surface 320a facing in a third direction and a fourth surface 320b facing in a fourth direction opposite the third direction. The second housing portion 320 may rotate about the hinge assembly 330 with respect to the first housing portion 310. The electronic device 301 may be variable between a folded state or an unfolded state.

In one embodiment, the electronic device 301 may have the first surface 310a facing the third surface 320a in a fully folded state, and the third direction may be substantially the same as the first direction in a fully unfolded state.

In one embodiment, the first housing portion 310 and the second housing portion 320 may be connected to be foldable relative to each other. The first housing portion 310 and the second housing portion 320 may be disposed on both sides based on a folding axis A and may have a shape that is generally symmetrical with respect to the folding axis A.

In one embodiment, the first housing portion 310 and the second housing portion 320 may vary in angle or distance therebetween depending on whether the electronic device 301 is in the unfolded state, the folded state, or an intermediate state in which the electronic device 301 is partially unfolded (or partially folded).

In one embodiment, the second housing portion 320 may include a sensor area 322 in which various sensors are disposed. For example, the sensors may be disposed on the rear of the display 350 in the sensor area 322. In one embodiment, the first housing portion 310 may also include a sensor area (not shown) in which at least one sensor is disposed.

In one embodiment, the first housing portion 310 and the second housing portion 320 may form a recess that receives therein the display 350. In one embodiment, components for performing various functions built into the electronic device 301 may be exposed to the front surface of the electronic device 301 through the sensor area 322, or through one or more openings provided in the sensor area 322. In one embodiment, the components may include various types of sensors. The sensors may include, for example, at least one of a front-facing camera or a proximity sensor. In one embodiment, the sensor area 322 may be omitted from the second housing portion 320 or may be formed at a position different from the one shown in the drawings.

In one embodiment, at least a portion of the first housing portion 310 and the second housing portion 320 may include a metallic or non-metallic material having a stiffness of a magnitude selected to support the display 350.

For example, at least a portion formed of the metallic material may provide a ground of the electronic device 301 and may be electrically connected to a ground formed on a PCB disposed inside the housing structure (e.g., 310 and 320).

In one embodiment, the first housing portion 310 may include a first rear cover 315 and a first side area 341. The first rear cover 315 may be coupled to the first side area 341. For example, the first rear cover 315 may have a substantially rectangular periphery, and the periphery may be enclosed by the first side area 341.

In one embodiment, the second housing portion 320 may include a second rear cover 325 and a second side area 342. The second rear cover 325 may be coupled to the second side area 342. For example, the second rear cover 325 may have a periphery that is enclosed by the second side area 342.

In one embodiment, the first rear cover 315 and the second rear cover 325 may have a substantially symmetrical shape with respect to the folding axis A. However, the first rear cover 315 and the second rear cover 325 do not necessarily have the mutually symmetrical shape. In one embodiment, the electronic device 301 may include the first rear cover 315 and the second rear cover 325 of various shapes. In one embodiment, the first rear cover 315 may be integrally formed with the first side area 341, and the second rear cover 325 may be integrally formed with the second side area 342.

In one embodiment, the first housing portion 310 and the second housing portion 320 may form a space in which various components (e.g., the processor 120, the antenna module 197, the sensor module 176, or the battery 189 of FIG. 1) of the electronic device 301 are to be arranged. In one embodiment, one or more components may be disposed or visually exposed on the rear surface of the electronic device 301.

For example, at least a portion of a sub-display 362 may be visually exposed through a first rear area 316 of the first rear cover 315. In one embodiment, one or more components or sensors may be visually exposed through a second rear area 326 of the second rear cover 325. In one embodiment, the sensors may include a proximity sensor and/or a rear-facing camera.

In one embodiment, the front-facing camera exposed to the front surface of the electronic device 301 through the one or more openings provided in the sensor area 322, or the rear-facing camera exposed through the second rear area 326 of the second rear cover 325 may include one or more lenses, an image sensor, and/or an image signal sensor (ISP). A flash may include, for example, a light-emitting diode (LED) or a xenon lamp. In some embodiments, two or more lenses (e.g., infrared camera, wide-angle, and telephoto lenses) and image sensors may be disposed on one surface of the electronic device 301.

In one embodiment, referring to FIG. 3B, the hinge housing 330a may be disposed between the first housing portion 310 and the second housing portion 320 to cover internal components (e.g., the hinge assembly 330). In one embodiment, the hinge assembly 330 may be covered by a portion of the first housing portion 310 and the second housing portion 320, or may be exposed to the outside, depending on a state (e.g., the unfolded state, the intermediate state, or the folded state) of the electronic device 301.

In one embodiment, when the electronic device 301 is in the unfolded state (e.g., fully unfolded state) as shown in FIG. 3A, the hinge assembly 330 may be covered by the first housing portion 310 and the second housing portion 320 not to be exposed.

In one embodiment, when the electronic device 301 is in the folded state (e.g., fully folded state) as shown in FIG. 3B, the hinge assembly 330 may be exposed to the outside between the first housing portion 310 and the second housing portion 320.

In one embodiment, in the intermediate state where the first housing portion 310 and the second housing portion 320 are folded with a certain angle therebetween, a portion of the hinge assembly 330 may be exposed to the outside between the first housing portion 310 and the second housing portion 320. However, an area exposed in this case may be smaller than that in the fully folded state. In one embodiment, the hinge assembly 330 may have a curved surface.

In one embodiment, the first side area 341 and the second side area 342 may be formed to enclose at least a portion of an edge area of the display 350. For example, the first side area 341 and the second side area 342 may enclose the front and/or side surface of the edge area of the display 350. In one embodiment, the first side area 341 and the second side area 342 may be formed to enclose at least a portion of the edge area of the display 350.

In one embodiment, the display 350 may be disposed in a space formed by the housing structure (e.g., 310 and 320). For example, the display 350 may be seated on the recess formed by the housing structure (e.g., 310 and 320) and may be viewed from the outside through the front surface of the electronic device 301. For example, the display 350 may include most of the front surface of the electronic device 301. Accordingly, the front surface of the electronic device 301 may include the display 350, and a partial area of the first housing portion 310 and a partial area of the second housing portion 320, which are adjacent to the display 350. In addition, the rear surface of the electronic device 301 may include the first rear cover 315, a partial area of the first housing portion 310 adjacent to the first rear cover 315, the second rear cover 325, and a partial area of the second housing portion 320 adjacent to the second rear cover 325.

In one embodiment, the display 350 may refer to a display having at least a partial area that is transformed into a flat surface or a curved surface. In one embodiment, the display 350 may include a folding area 353, a first area 351 disposed on one side of the folding area 353 (e.g., on the left side of the folding area 353 shown in FIG. 3A), and a second area 352 disposed on the other side of the folding area 353 (e.g., on the right side of the folding area 353 shown in FIG. 3A). However, such an area division of the display 350 shown in FIG. 3A is merely an example, and the display 350 may be divided into a plurality of areas (e.g., four or more areas, or two areas) depending on the structure or function thereof. For example, in the embodiment shown in FIG. 3A, the display 350 may be divided into areas based on the folding area 353 extending in parallel to the folding axis A. In one embodiment, the display 350 may also be divided into areas based on another folding axis (e.g., a folding axis parallel to a width direction of the electronic device 301).

In one embodiment, the display 350 may be coupled to or disposed adjacent to a touch panel in which a touch detection circuit and a pressure sensor configured to measure an intensity (or pressure) of a touch are provided. For example, the display 350 is an example of the touch panel, and may be coupled to or disposed adjacent to the touch panel that detects an electromagnetic resonance (EMR)-type stylus pen.

In one embodiment, the first area 351 and the second area 352 may be generally symmetrical with respect to the folding area 353. However, unlike the first area 351, the second area 352 may include a notch that is cut depending on the presence of the sensor area 322, but may be symmetrical to the first area 351 in other areas. For example, the first area 351 and the second area 352 may include a mutually symmetrical portion and a mutually asymmetrical portion.

In one embodiment, an edge thickness of the first area 351 and the second area 352 may be formed differently from an edge thickness of the folding area 353. The edge thickness of the folding area 353 may be formed to be less than the thickness of the first area 351 and the second area 352. In terms of thickness, the first area 351 and the second area 352 may have an asymmetrical shape when the first area 351 and the second area 352 are viewed cross-sectionally.

For example, an edge of the first area 351 may be formed to have a first radius of curvature, and an edge of the second area 352 may be formed to have a second radius of curvature that is different from the first radius of curvature. In one embodiment, in terms of thickness, the first area 351 and the second area 352 may have a symmetrical shape, when the first area 351 and the second area 352 are viewed cross-sectionally.

Hereinafter, operations of the first housing portion 310 and the second housing portion 320 and respective areas of the display 350 depending on the state of the electronic device 301 (e.g., the folded state, the unfolded state, or the intermediate state) will be described.

In one embodiment, when the electronic device 301 is in the unfolded state (e.g., the state shown in FIG. 3A), the first surface 310a of the first housing portion 310 and the third surface 320a of the second housing portion 320 may be disposed to form an angle of about 180 degrees and face the same direction. The surface of the first area 351 and the surface of the second area 352 of the display 350 may form 180 degrees and may face the same direction (e.g., toward the front surface of the electronic device 301). The folding area 353 may form the same plane as the first area 351 and the second area 352.

In one embodiment, when the electronic device 301 is in the folded state (e.g., the state shown in FIG. 3B), the first surface 310a of the first housing portion 310 and the third surface 320a of the second housing portion 320 may be disposed to face each other. The surface of the first area 351 and the surface of the second area 352 of the display 350 may form a narrow angle (e.g., between 0 and 10 degrees) and may face each other. The folding area 353 may be at least partially curved, with a predetermined curvature.

In one embodiment, when the electronic device 301 is in the intermediate state, the first housing portion 310 and the second housing portion 320 may be disposed with a certain angle therebetween. The surface of the first area 351 and the surface of the second area 352 of the display 350 may form an angle that is larger than a corresponding angle formed in the folded state and smaller than a corresponding angle formed in the unfolded state. The folding area 353 may be at least partially curved, with a predetermined curvature that may be smaller than that in the folded state.

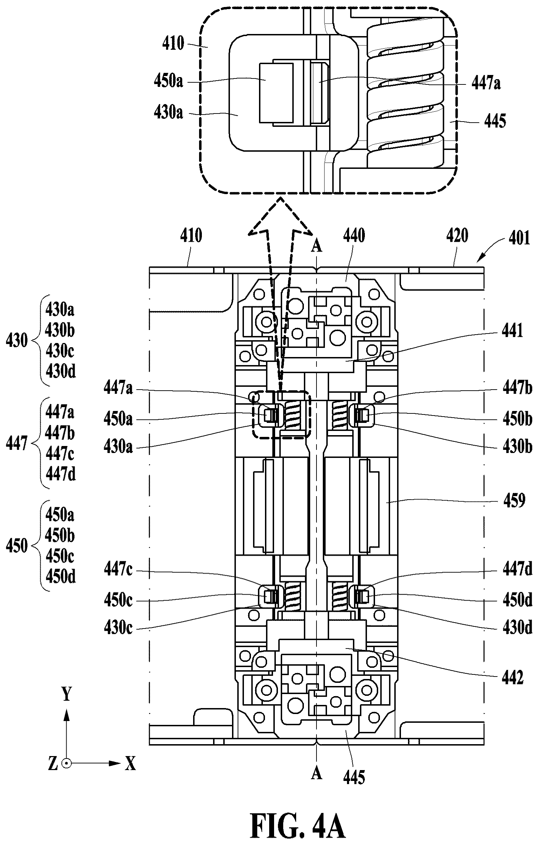

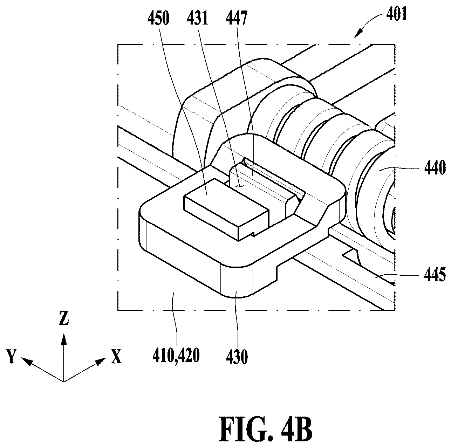

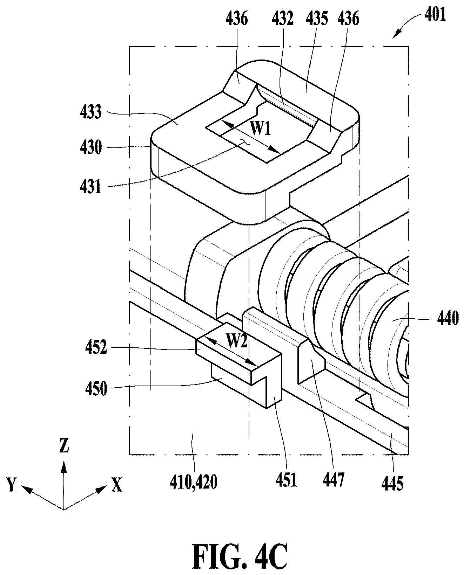

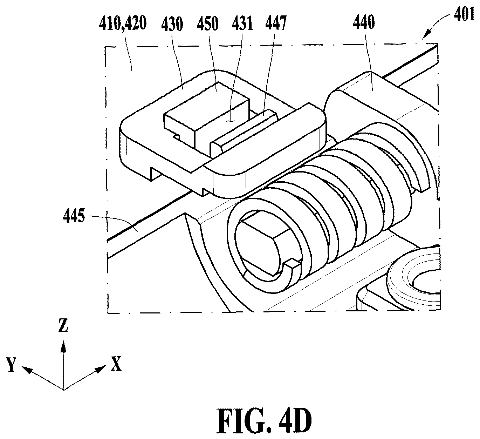

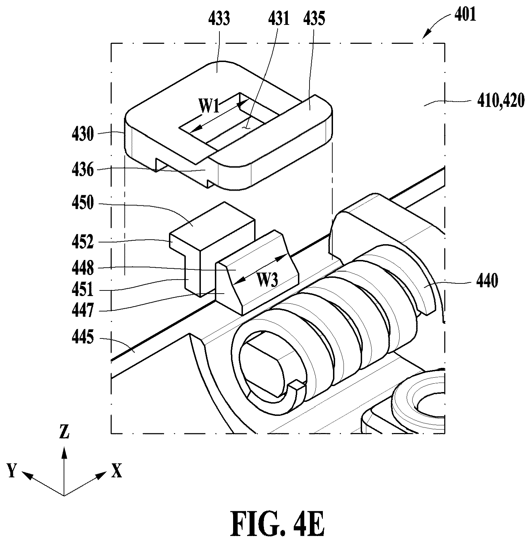

FIG. 4A is a top view of an electronic device 401 according to an embodiment, and FIG. 4B, FIG. 4C, FIG. 4D, and FIG. 4E are perspective views of a partial configuration of the electronic device 401 according to an embodiment.

Referring to FIGS. 4A, 4B, 4C, 4D, and 4E, according to one embodiment, the electronic device 401 (e.g., the electronic device 101 of FIG. 1, the electronic device 201 of FIGS. 2A and 2B, and the electronic device 301 of FIGS. 3A and 3B) may include a housing structure (e.g., 410 and 420) (e.g., the housing structure (e.g., 210 and 220) of FIGS. 2A and 2B, and the housing structure (e.g., 310 and 320) of FIGS. 3A and 3B) that forms the exterior and houses components therein.

Hereinafter, what has been described above is omitted, and it is to be noted that some configurations or components and structures may be substituted, added, or omitted in the electronic device 401 to the extent readily understood by those skilled in the art with reference to the accompanying drawings and the following description. It is also to be noted that at least one of the configurations or components and features described above according to the preceding embodiments may be combined in the electronic device 401, unless technically explicitly impossible.

In one embodiment, the electronic device 401 may be a foldable or bendable electronic device. In one embodiment, the electronic device 401 may include at least some of the housing structure (e.g., 410 and 420), a connecting body 430, a hinge assembly 440 (e.g., the hinge assembly 230 of FIGS. 2A and 2B, and the hinge assembly 330 of FIGS. 3A and 3B), and a hinge housing 445 (e.g., the hinge housing 265 of FIGS. 2A and 2B, and the hinge housing 330a of FIGS. 3A and 3B).

In one embodiment, the housing structure (e.g., 410 and 420) may include a first housing portion 410 (e.g., the first housing portion 210 of FIGS. 2A and 2B, and the first housing portion 310 of FIGS. 3A and 3B) and a second housing portion 420 (e.g., the second housing portion 220 of FIGS. 2A and 2B, and the second housing portion 320 of FIGS. 3A and 3B). The first housing portion 410 and the second housing portion 420 may be spaced apart from each other.

In one embodiment, the hinge assembly 440 may connect the first housing portion 410 and the second housing portion 420 such that they are foldable with respect to each other. The hinge assembly 440 may be operable between a "folded state" in which the first housing portion 410 and the second housing portion 420 face each other relative to a folding axis A and an "unfolded state" in which the first housing portion 410 and the second housing portion 420 do not face each other.

In one embodiment, the hinge assembly 440 may include a first hinge portion 441 and a second hinge portion 442. The first hinge portion 441 and the second hinge portion 442 may connect the first housing portion 410 and the second housing portion 420, respectively. The first hinge portion 441 and the second hinge portion 442 may be spaced apart from each other in a direction of the folding axis A.

For example, the first hinge portion 441 may connect the first housing portion 410 and the second housing portion 420 on one side (e.g., in a +Y direction), and the second hinge portion 442 may connect the first housing portion 410 and the second housing portion 420 on the other side (e.g., in a -Y direction).

In one embodiment, the hinge housing 445 may cover or house the hinge assembly 440. The hinge assembly 440 may be partially disposed in the hinge housing 445. The hinge housing 445 may be disposed between the first housing portion 410 and the second housing portion 420. The hinge housing 445 may be disposed on the inside of the housing structure (e.g., 410 and 420) or may be exposed to the outside of the housing structure (e.g., 410 and 420) depending on the folded state of the housing structure (e.g., 410 and 420). In an embodiment the hinge housing 445 may have a curved cross-section e.g. a U-shaped cross-section.

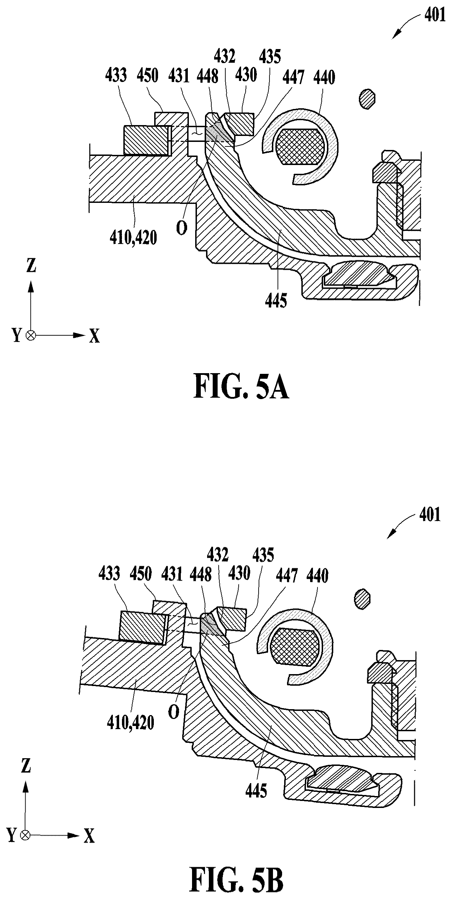

In one embodiment, the hinge housing 445 may include a protruding region 447. In an embodiment the protruding region 447may have a curved cross-section. The protruding region 447 may be provided at a position facing the connecting body 430 based on the unfolded state. When viewed in the direction of the folding axis A (e.g., in a Y-axis direction), the connecting body 430 may overlap the protruding region 447, in the unfolded state. For example, as shown in FIG. 5A, when viewed in the direction of the folding axis (e.g., in the Y-axis direction), the connecting body 430 and the protruding region 447 may include an overlapping area O where they overlap each other, while the electronic device 401 is at least partially unfolded.

In one embodiment, the protruding region 447 may be inserted into, coupled to, fastened to, connected to, or disposed to face the connecting body 430, in the unfolded state. In one embodiment, the protruding region 447 of the hinge housing 445 may be integrally formed. In one embodiment, the protruding region 447 of the hinge housing 445 may be formed separately from the hinge housing 445 and coupled or bonded to the hinge housing 445.

In one embodiment, the protruding region 447 may limit a range of movement of the connecting body 430 or limit the movement of the connecting body 430, in the unfolded state. The connecting body 430 may be disposed in, connected to, supported by, or secured to a housing portion. By limiting the movement of the connecting body 430, the protruding region 447 may reduce or prevent movement of the housing structure (e.g., 410 and 420). Specifically, in an unfolded state the engagement of the protruding region 447 with the connecting body 430 facilitates restricting of movement of the first housing portion (410; 410-1; 410-2) in a direction parallel to a plane of the first housing portion (410; 410-1; 410-2).

For example, in a case where the electronic device 401 receives an external force, collides, or is dropped while in the unfolded state, the housing structure (e.g., 410 and 420) may temporarily move in a direction receding away from the hinge housing 445 or in a direction approaching the hinge housing 445. As the housing structure (e.g., 410 and 420) moves, components of the electronic device 401, such as, the hinge assembly 440, a connecting member 459, or a display (e.g., the display module 160 of FIG. 1, the display 261 of FIGS. 2A and 2B, or the display 350 of FIGS. 3A and 3B) supported by the housing structure (e.g., 410 and 420) may receive stress to be broken or less durable.

In one embodiment, as the connecting body 430 is disposed to overlap the protruding region 447, in the unfolded state, the protruding region 447 may limit the movement of the connecting body 430. As the movement of the connecting body 430 is limited, a relative movement of the housing structure (e.g., 410 and 420) may also be limited, reducing or preventing breakage of the foldable electronic device 401 and providing durability of the electronic device 401.

In one embodiment, when viewed in the direction of the folding axis A, the connecting body 430 may be spaced apart from the protruding region 447, in the folded state. As a state shifts from the unfolded state to the folded state, the protruding region 447 may gradually move away from the connecting body 430. The connecting body 430 and the protruding region 447 may not interfere with a folding operation of the electronic device 401, and the electronic device 401 may thus provide a smooth and reliable folding operation.

In one embodiment, in the unfolded state, the protruding region 447 and the connecting body 430 may not contact each other. In the unfolded state, the protruding region 447 and the connecting body 430 overlap each other when viewed in the direction of the folding axis A, but the protruding region 447 and the connecting body 430 may be spaced apart by a predetermined distance when there is no external force acting thereon, in the unfolded state.

In one embodiment, the protruding region 447 and the connecting body 430 may contact each other when the housing structure (e.g., 410 and 420) or the hinge housing 445 is moved by an external force, and may limit a relative movement of the housing structure (e.g., 410 and 420) relative to the hinge housing 445. In the unfolded state, the protruding region 447 may be spaced apart from the connecting body 430, allowing the electronic device 401 to provide a smooth and reliable folding operation.

In one embodiment, the protruding region 447 may include a first sloped surface (or "offset" herein) 448, and the connecting body 430 may include a second offset 432. The first offset 448 and the second offset 432 may be disposed opposite each other, in the unfolded state.

In one embodiment, the first offset 448 and the second offset 432 may be formed to match (or otherwise mirror) one another preferably to facilitate a uniform gap G1 between them in the unfolded state. In one embodiments, the gap G1 may be non-uniform.

In one embodiment, the housing structure (e.g., 410 and 420) may include a supporting region 450. The supporting region 450 may protrude upwardly (e.g., in a +Z direction) from the housing structure (e.g., 410 and 420). The supporting region 450 may support the connecting body 430 by connecting, securing, or fastening the connecting body 430 to the housing structure (e.g., 410 and 420). The supporting region 450 may limit the movement of the connecting body 430 in a certain direction.

In one embodiment, the connecting body 430 may be disposed on at least one of the first housing portion 410 and the second housing portion 420. For example, the electronic device 401 may include a plurality of connecting bodies 430, and the plurality of connecting bodies 430 may include at least some of a first connecting body 430a, a second connecting body 430b, a third connecting body 430c, and a fourth connecting body 430d.

In one embodiment, the plurality of connecting bodies 430 may be spaced apart from each other and may be symmetrically disposed in pairs of two. For example, as shown in FIG. 4A, the first connecting body 430a may be disposed on one side (e.g., on a +Y side) of the first housing portion 410 facing the hinge housing 445. The second connecting body 430b may be disposed on one side (e.g., on the +Y side) of the second housing portion 420 facing the hinge housing 445. The third connecting body 430c may be disposed on the other side (e.g., on a -Y side) of the first housing portion 410 facing the hinge housing 445. The fourth connecting body 430d may be disposed on the other side (e.g., on the -Y side) of the second housing portion 420 facing the hinge housing 445.

In one embodiment, the hinge housing 445 may include a plurality of protruding regions 447. The plurality of protruding regions 447 may include at least some of a first protruding region 447a, a second protruding region 447b, a third protruding region 447c, and a fourth protruding region 447d.

In one embodiment, the plurality of protruding regions 447 may be disposed respectively corresponding to the plurality of connecting bodies 430. Specifically, each protruding region 447 of the plurality of protruding regions 447 may correspond to one connecting body 430 of the plurality of connecting bodies 430. For example, in the unfolded state, the first protruding region 447a may be provided at a position facing the first connecting body 430a. In the unfolded state, the second protruding region 447b may be provided at a position facing the second connecting body 430b. In the unfolded state, the third protruding region 447c may be provided at a position facing the third connecting body 430c. In the unfolded state, the fourth protruding region 447d may be provided at a position facing the fourth connecting body 430d.

In one embodiment, the housing structure (e.g., 410 and 420) may include a plurality of supporting regions 450. The plurality of supporting regions 450 may include at least some of a first supporting region 450a, a second supporting region 450b, a third supporting region 450c, and a fourth supporting region 450d.

In one embodiment, the plurality of supporting regions 450 may be disposed respectively corresponding to the plurality of connecting bodies 430. Specifically, each supporting region 450 of the plurality of supporting regions 450 may correspond to one connecting body 430 of the plurality of connecting bodies 430. For example, the first supporting region 450a may be fastened to the first connecting body 430a. The second supporting region 450b may be fastened to the second connecting body 430b. The third supporting region 450c may be fastened to the third connecting body 430c. The fourth supporting region 450d may be fastened to the fourth connecting body 430d.

In one embodiment, the connecting member 459 may electrically connect the components disposed in the first housing portion 410 and the components disposed in the second housing portion 420. The connecting member 459 may be a foldable component and may be formed of, for example, a flexible printed circuit board (FPCB).

In one embodiment, the connecting member 459 may transmit electrical signals or power from the first housing portion 410 to the second housing portion 420, or from the second housing portion 420 to the first housing portion 410. For example, the connecting member 459 may electrically connect various components (e.g., the processor 120, the antenna module 197, the sensor module 176, or the battery 189 of FIG. 1) of the electronic device 401 disposed in each of the first housing portion 410 and the second housing portion 420 to each other.

In one embodiment, the connecting body 430 may be disposed between any one of the first hinge portion 441 and the second hinge portion 442 and the connecting member 459. For example, as shown in FIG. 4A, the first connecting body 430a and the second connecting body 430b may be disposed between the first hinge portion 441 and the connecting member 459. The third connecting body 430c and the fourth connecting body 430d may be disposed between the second hinge portion 442 and the connecting member 459.

In one embodiment, the connecting body 430 may be disposed between any one of the first hinge portion 441 and the second hinge portion 442 and the connecting member 459, improving the structural efficiency of the electronic device 401 and facilitating miniaturization and lightweighting of the electronic device 401.

In one embodiment, the connecting body 430 may be disposed between any one of the first hinge portion 441 and the second hinge portion 442 and a side surface (also simply a "side") of the housing structure (e.g., 410 and 420). For example, although not shown, the first connecting body 430a and the second connecting body 430b may be disposed between the first hinge portion 441 and one side (e.g., a surface in the +Y direction) of the housing structure (e.g., 410 and 420). The third connecting body 430c and the fourth connecting body 430d may be disposed between the second hinge portion 442 and another side (e.g., a surface in the -Y direction) of the housing structure (e.g., 410 and 420).

In one embodiment, the connecting body 430 may be disposed between any one of the first hinge portion 441 and the second hinge portion 442 and one side of the housing structure (e.g., 410 and 420), stably limiting the movement of the housing structure (e.g., 410 and 420) and accordingly stably reducing or preventing breakage of the foldable electronic device 401.

However, the number, arrangement, and structure of the plurality of connecting bodies 430, the plurality of protruding regions 447, and the plurality of supporting regions 450 may not be limited thereto but be implemented in various ways. Hereinafter, the connecting body 430, the protruding region 447, and the supporting region 450 will be described using the first connecting body 430a, the first protruding region 447a, and the first supporting region 450a shown in FIG. 4A by way of example but may not be limited thereto, and the following description thereof may also apply to each of the plurality of connecting bodies 430, the plurality of protruding regions 447, and the plurality of supporting regions 450 in substantially the same or similar way with the directions and arrangements applied the same to the respective components or configurations.

However, the term "substantially" used herein may indicate the same level or degree, with tolerances or errors in typical manufacturing processes reflected therein. Alternatively, the term "substantially" may refer to a range including any one of +/-0.1%, +/-0.5%, +/-1%, +/-3%, +/-5%, +/-7%, +/-10%, +/-15%, and +/-20%, based on 0% which indicates the literal equivalence.

In one embodiment, the connecting body 430 may include an open region 431. The open region 431 may receive therein the protruding region 447, in the unfolded state. The open region 431 may be provided at the center of the connecting body 430. The open region 431 may be formed as a hole or a groove structure or a recess structure or a slot structure. In the unfolded state, the protruding region 447 may be disposed (at least partly) inside the open region 431, and the protruding region 447 and the connecting body 430 may thus be disposed overlappingly. In some embodiments the open region 431 may be a through or blind.

In one embodiment, the open region 431 may be disposed opposite one side (e.g., a surface in a +X direction) of the protruding region 447. The connecting body 430 may limit the movement of the housing structure (e.g., 410 and 420) based on a direction in which the protruding region 447 and the open region 431 face each other. Referring to FIGS. 4B and 4D, the connecting body 430 may limit the movement of the housing structure (e.g., 410 and 420) in a direction receding away from the hinge housing 445 (e.g., in a -X direction).

In one embodiment, the open region 431 of the connecting body 430, the supporting region 450, and the protruding region 447 may have respective widths (e.g., lengths in the Y-axis direction) along the folding axis A. For example, the open region 431 may have a first width W1, the supporting region 450 may have a second width W2, and the protruding region 447 may have a third width W3 as shown in Figs. 4C and 4E.

In one embodiment, the supporting region 450 may be inserted into the open region 431. The supporting region 450 may be disposed to surround at least a portion of the open region 431 to support the connecting body 430. The supporting region 450 may have a shape corresponding to that of a portion of the connecting body 430 such that it is fastened to the portion of the connecting body 430 including the open region 431.

In one embodiment, the supporting region 450 may include a first region 451 and a second region 452. The first region 451 may be a portion in a shape extending in one direction (e.g., +Z direction) from the housing structure (e.g., 410 and 420). The second region 452 may be a portion that is bent from an end of the first region 451 in a direction receding away from the hinge housing 445 (e.g., in the -X direction). Particularly, the supporting region 450 may have an L shape.

In one embodiment, the connecting body 430 may be fastened to the supporting region 450 while engaging with the first region 451 and the second region 452. At least two sides of the connecting body 430 may abut the first region 451 and the second region 452, respectively.

In one embodiment, the width of the open region 431 of the connecting body 430 may be substantially the same as the width of the supporting region 450. For example, the first width W1 and the second width W2 may be substantially the same, and the connecting body 430 may be coupled to the open region 431 by engaging therewith.

In one embodiment, the supporting region 450 may be inserted into an end on one side (e.g., in the -X direction) of the open region 431. The protruding region 447 may be inserted into an end on the other side (e.g., in the +X direction) of the open region 431, in the unfolded state. The supporting region 450 and the protruding region 447 may be disposed adjacent to each other, together within the open region 431, in the unfolded state.

In one embodiment, the open region 431 of the connecting body 430 may have substantially the same width as the protruding region 447. For example, the first width W1 and the third width W3 may be substantially the same.

In one embodiment, as the first width W1 and the third width W3 are substantially the same, the connecting body 430 and the protruding region 447 may provide a detent force to an unfolding motion of the electronic device 401. Alternatively, in one embodiment, as the first width W1 and the third width W2 are substantially the same, the connecting body 430 may limit the movement of the housing structure (e.g., 410 and 420) in the direction of the folding axis A (e.g., in the Y-axis direction). The connecting body 430 may limit the movement of the housing structure (e.g., 410 and 420) in a plurality of directions, thereby stably reducing or preventing breakage of the foldable electronic device 401. For example, the connecting body 430 may limit a direction of movement of the housing structure (e.g., 410 and 420) in the direction receding away from the hinge housing 445 (e.g., in the -X direction) and/or in the direction of the folding axis A (e.g., in the Y-axis direction).

In one embodiment, the connecting body 430 may include a first opposing region 433, a second opposing region 435, and a middle region 436. The first opposing region 433 may be a region facing the housing structure (e.g., 410 and 420). The second opposing region 435 may be a region facing the hinge housing 445. The middle region 436 may be a region connecting the first opposing region 433 and the second opposing region 435. The open region 431 may be formed between the first opposing region 433 and the second opposing region 435.

In one embodiment, the middle region 436 may have an ascending shape extending from the first opposing region 433 to the second opposing region 435. For example, when viewed in the direction of the folding axis A, the middle region 436 may have an inclined structure with the height gradually increasing while extending in one direction (e.g., the +X direction). As another example the first opposing region 433 and the second opposing region 435 may each extend on parallel planes while the middle region 436 connects the first opposing region 433 and the second opposing region 435 wherein an angle between the middle region 436 and the first opposing region 433 is greater than 90 degrees and also an angle between the middle region 436 and the second opposing region 435 is greater than 90 degrees as shown in Fig. 4C. The middle region 436 of the inclined structure may be provided to allow the electronic device 401 to reduce or prevent interference with other structures by the arrangement of the connecting body 430 and the electronic device 401 to provide spatial efficiency.

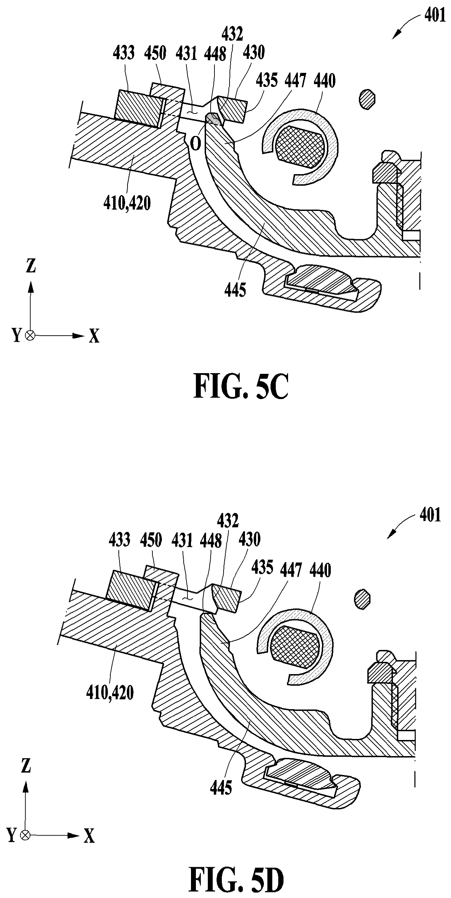

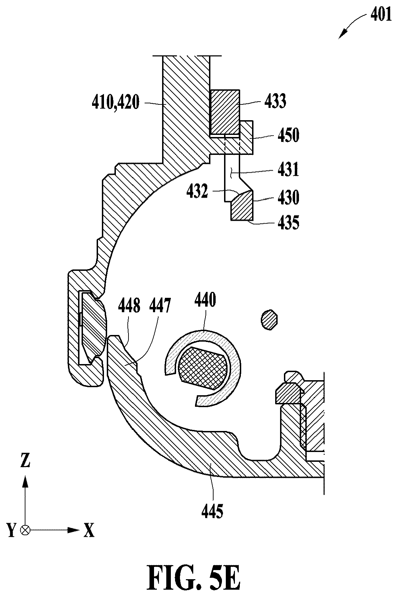

FIGS. 5A, 5B, 5C, 5D, and 5E are cross-sectional views of the electronic device 401 according to an embodiment.

Specifically, FIG. 5A is a cross-sectional view of the electronic device 401 in an unfolded or fully unfolded state, FIG. 5E is a cross-sectional view of the electronic device 401 in a folded or fully folded state, and FIGS. 5B, 5C, and 5D are cross-sectional views of the electronic device 401 performing an unfolding motion or folding motion in sequential order between the state shown in FIG. 5A and the state shown in FIG. 5E.

Referring to FIGS. 5A, 5B, 5C, 5D, and 5E, the protruding region 447 may include the first offset 448, and the connecting body 430 may include the second offset 432.

Hereinafter, what has been described above is omitted, and it is to be noted that some configurations or components and structures may be substituted, added, or omitted in the electronic device 401 to the extent readily understood by those skilled in the art with reference to the accompanying drawings and the following description. It is also to be noted that at least one of the configurations or components and features described above according to the preceding embodiments may be combined in the electronic device 401, unless technically explicitly impossible.

In one embodiment, the first offset 448 may be a side facing the open region 431 of the connecting body 430, in the unfolded state (e.g., the state of the electronic device 401 shown in FIG. 5A). Alternatively, the first offset 448 may be one side (e.g., a surface in the +X direction) of the protruding region 447 facing the hinge housing 445.

In one embodiment, the second offset 432 may be a side facing the first offset 448, in the unfolded state. Alternatively, the second offset 432 may be one side (e.g., a surface in the -X direction) of the open region 431 facing the first housing portion 410 of the housing structure (e.g., 410 and 420).

In one embodiment, the first offset 448 and the second offset 432 may be disposed opposite (or to face) each other, preventing the connecting body 430 and the protruding region 447 from coming into contact or snagging on each other during the unfolding or folding motion of the electronic device 401. Alternatively, the first offset 448 and the second offset 432 may not interfere with a folding operation of the electronic device 401, and the electronic device 401 may thus provide a smooth and stable folding operation.

In one embodiment, the first offset 448 and the second offset 432 may be disposed substantially horizontal in at least some regions opposite (or facing) each other, in the unfolded state. The first offset 448 and that second offset 432 that are substantially horizontal to each other may increase the size of a contact area when the housing structure (e.g., 410 and 420) or the hinge housing 445 is moved by some factors such as impact, and may effectively limit the relative movement of the housing structure (e.g., 410 and 420) relative to the hinge housing 445. Additionally, the first offset 448 and that second offset 432 that are substantially horizontal to each other may be configured to maintain an equidistant interval during the folding operation of the electronic device 401.

In one embodiment, the first offset 448 and the second offset 432 may be equidistantly spaced apart from each other in at least some regions opposite each other, in the unfolded state. At least one of the first offset 448 or the second offset 432 may have a plurality of slope angles or may have a shape with a gradually changing slope angle. The first offset 448 and the second offset 432 may be provided in a mutually opposing shape (mirrored shape), and a spacing or distance between the first offset 448 and the second offset 432 may be equidistant in the at least some regions.

In one embodiment, as shown in FIGS. 5A, 5B, 5C, and 5D, the first offset 448 and the second offset 432 that are equidistantly spaced apart may remain mutually spaced apart during the folding or unfolding motion of the electronic device 401. The first offset 448 and the second offset 432 that are equidistantly spaced apart may not interfere with the folding operation of the electronic device 401, and the electronic device 401 may thus provide a smooth and stable folding operation.

In one embodiment, the first offset 448 and the second offset 432 that are equidistantly spaced apart may increase the size of the contact area when the housing structure (e.g., 410 and 420) or the hinge housing 445 is moved by some factors such as impact, and may effectively limit the relative movement of the housing structure (e.g., 410 and 420) relative to the hinge housing 445.

In one embodiment, as shown in FIGS. 5A, 5B, and 5C, when viewed in the direction of the folding axis (e.g., in the Y direction), the connecting body 430 and the protruding region 447 may include an overlapping area O where they overlap each other, in a state where the electronic device 401 is at least partially unfolded.

For example, in a state where the electronic device 401 is fully unfolded (e.g., the state shown in FIG. 5A), the size of the overlapping area O of the connecting body 430 and the protruding region 447 may be the largest compared to other states. As the electronic device 401 is gradually folded, the size of the overlapping area O may decrease gradually. Once a certain state (e.g., the state or the folded state shown in FIGS. 5D and 5E) is reached, the connecting body 430 and the protruding regions 447 may not overlap.

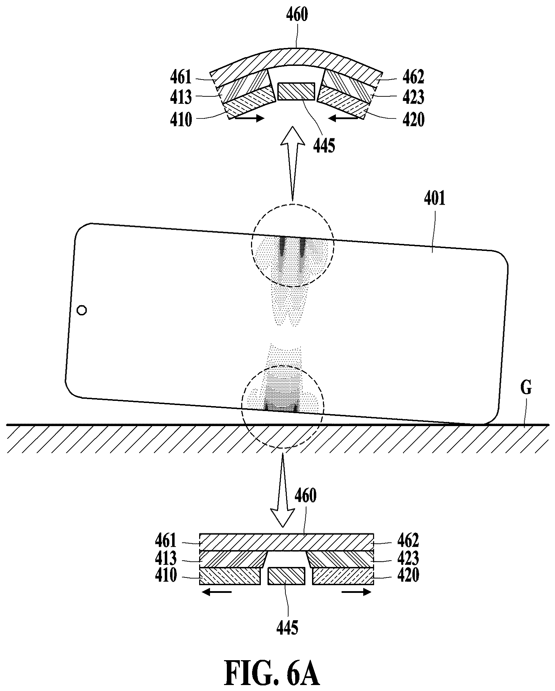

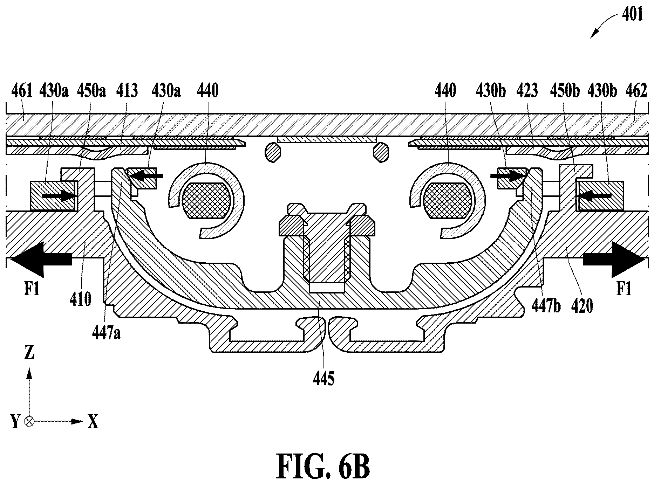

FIG. 6A is a schematic diagram illustrating the electronic device 401 in an impact state according to an embodiment, and FIG. 6B is a cross-sectional view of the electronic device 401 according to an embodiment.

Specifically, FIG. 6A is a diagram illustrating an example of a force acting on a component in a state where the electronic device 401 is dropped and collides with the ground surface G, and FIG. 6B is a diagram illustrating an example of a force acting in a state where a region of the electronic device 401 is tensile according to an embodiment.

Hereinafter, what has been described above is omitted, and it is to be noted that some configurations or components and structures may be substituted, added, or omitted in the electronic device 401 to the extent readily understood by those skilled in the art with reference to the accompanying drawings and the following description. It is also to be noted that at least one of the configurations or components and features described above according to the preceding embodiments may be combined in the electronic device 401, unless technically explicitly impossible.

In one embodiment, the electronic device 401 may include a display 460 (e.g., the display module 160 of FIG. 1, the display 261 of FIGS. 2A and 2B, or the display 350 of FIGS. 3A and 3B). The display 460 may be a flexible, foldable, or bendable display.

In one embodiment, the display 460 may include a first display area 461 (e.g., the first area 261a of FIGS. 2A and 2B or the first area 351 of FIGS. 3A and 3B) and a second display area 462 (e.g., the first area 261a of FIGS. 2A and 2B or the first area 351 of FIGS. 3A and 3B).

In one embodiment, the first display area 461 may be supported by a first supporting structure 413 of the first housing portion 410, and the second display area 462 may be supported by a second supporting structure 423 of the second housing portion 420.

As shown in FIG. 6A, when the electronic device 401 receives an impact while in the unfolded state, at least one of the first housing portion 410 or the second housing portion 420 may move in a direction receding away from or approaching closer to the hinge housing 445.

In one embodiment, when at least one of the first housing portion 410 or the second housing portion 420 temporarily moves in a direction that is relatively farther away from or closer to the hinge housing 445, the display 460 may receive tension or compression, and the display 460 may thus be bent, stressed, or broken.

Referring to FIG. 6B, in the unfolded state, the first housing portion 410 may receive an external force F1 for moving in a direction (e.g., in the -X direction) receding away from the hinge housing 445.

In one embodiment, the first connecting body 430a may be connected to or in contact with the first supporting region 450a and the first protruding region 447a, respectively, to impede a relative movement of the first housing portion 410 relative to the hinge housing 445.

In one embodiment, while secured to the first supporting region 450a along with the first connecting body 430a, the first connecting body 430a and the first protruding region 447a may contact in a direction in which the external force F1 acts. For example, a first offset (e.g., the first offset 448 of FIG. 5A) of the first connecting body 430a and a second offset (e.g., the second offset 432 of FIG. 5A) of the first supporting region 450a may contact. The connecting body 430 may reduce or prevent a relative movement of the first housing portion 410, thereby reducing or preventing the display 460 from being bent or compressed.

Referring to FIG. 6B, in the unfolded state, the second housing portion 420 may receive an external force F1 for moving in a direction (e.g., in the +X direction) receding away from the hinge housing 445.

In one embodiment, the second connecting body 430b may be connected to or in contact with the second supporting region 450b and the second protruding region 447b, respectively, to impede a relative movement of the second housing portion 420 relative to the hinge housing 445.

In one embodiment, while secured to the second supporting region 450b along with the second connecting body 430b, the second connecting body 430b and the second protruding region 447b may contact in a direction in which the external force F1 acts. For example, the first offset 448 of the second connecting body 430b and the second offset 432 of the second supporting region 450b may contact. The connecting body 430 may reduce or prevent a relative movement of the second housing portion 420, thereby reducing or preventing the display 460 from being bent or compressed.

For example, in a case where the electronic device 401 is dropped to the ground surface G while in the unfolded state, the electronic device 401 without the connecting body 430 may have the first housing portion 410 that is spaced away by maximally 0. 45 millimeters (mm) from the hinge housing 445, whereas, under the same conditions, the electronic device 401 including the connecting body 430 may have the first housing portion 410 that is spaced away by maximally 0.38 mm from the hinge housing 445, which may demonstrate a distance reduction effect with a distance reduced by approximately 15%. When a maximum separation distance is reduced as such, the stress on the display 460 of the electronic device 401 may be reduced.

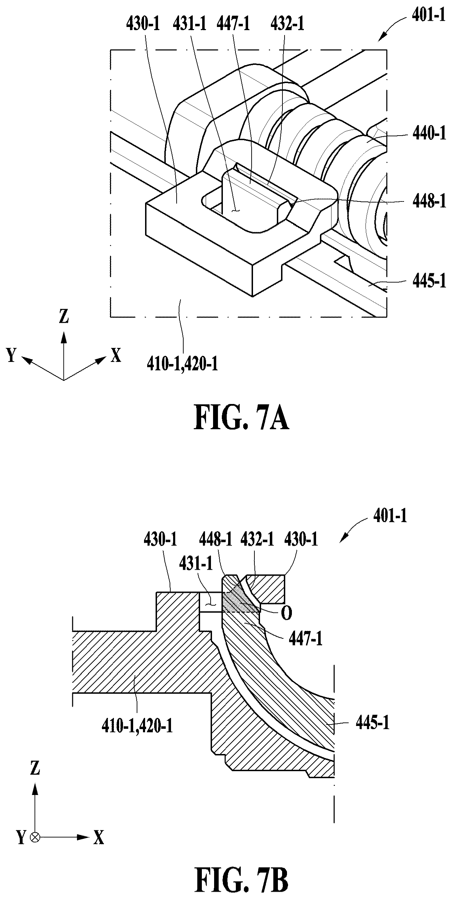

FIG. 7A is a perspective view of a partial configuration of an electronic device 401-1 according to an embodiment, and FIG. 7B is a cross-sectional view of the electronic device 401-1 according to an embodiment.

Referring to FIGS. 7A and 7B, according to one embodiment, the electronic device 401-1 (e.g., the electronic device 401 of FIGS. 4A, 4B, 4C, 4D, 4E, 5A, 5B, 5C, 5D, 5E, 6A, and 6B) may include a connecting body 430-1 (e.g., the connecting body 430 of FIGS. 4A, 4B, 4C, 4D, 4E, 5A, 5B, 5C, 5D, 5E, 6A, and 6B) and a protruding region 447-1 (e.g., the protruding region 447 of FIGS. 4A, 4B, 4C, 4D, 4E, 5A, 5B, 5C, 5D, 5E, 6A, and 6B).

Hereinafter, what has been described above is omitted, and it is to be noted that some configurations or components and structures may be substituted, added, or omitted in the electronic device 401-1 to the extent readily understood by those skilled in the art with reference to the accompanying drawings and the following description. It is also to be noted that at least one of the configurations or components and features described above according to the preceding embodiments may be combined in the electronic device 401-1, unless technically explicitly impossible.

In one embodiment, the electronic device 401-1 may include a housing structure (e.g., 410-1 and 420-1) (e.g., the housing structure (e.g., 410 and 420) of FIGS. 4A, 4B, 4C, 4D, 4E, 5A, 5B, 5C, 5D, 5E, 6A, and 6B), a hinge assembly 440-1 (e.g., the hinge assembly 440 of FIGS. 4A, 4B, 4C, 4D, 4E, 5A, 5B, 5C, 5D, 5E, and 6B), and a hinge housing 445-1 (e.g., the hinge housing 445 of FIGS. 4A, 4B, 4C, 4D, 4E, 5A, 5B, 5C, 5D, 5E, 6A, and 6B). The housing structure (e.g., 410-1 and 420-1), the hinge assembly 440-1, and the hinge housing 445-1 may be applicable to the electronic device 401-1 in substantially the same or similar way as what has been described above regarding the electronic device 401 according to the preceding embodiments.

In one embodiment, the connecting body 430-1 may include an open region 431-1 (e.g., the open region 431-1 of FIGS. 4B, 4C, 4D, 4E, 5A, 5B, 5C, 5D, 5E, and 6B) and a first offset 432-1 (e.g., the first offset 432 of FIGS. 4C, 5A, 5B, 5C, 5D, 5E, and 6B). In one embodiment, the protruding region 447-1 may include a second offset 448-1 (e.g., the second offset 448 of FIGS. 4E, 5A, 5B, 5C, 5D, 5E, and FIG. 6B).

In one embodiment, the connecting body 430-1 may be formed as a single body with the housing structure (e.g., 410-1 and 420-1). The connecting body 430-1 may be continuous from the housing structure (e.g., 410-1 and 420-1). For example, the connecting body 430-1 may be molded or injected integrally during the manufacturing of the housing structure (e.g., 410-1 and 420-1). Alternatively, the connecting body 430-1 may be bonded or coupled to the housing structure (e.g., 410-1 and 420-1).

In one embodiment, as the connecting body 430-1 is formed as a single body with the housing structure (e.g., 410-1 and 420-1), the connecting body 430-1 and the protruding region 447-1 may effectively limit the movement of the housing structure (e.g., 410-1 and 420-1), and the connecting body 430-1 may be prevented from being dislodged or detached from the housing structure (e.g., 410-1 and 420-1). The connecting body 430-1 provided in such an integral form may provide the coupling stability of the housing structure (e.g., 410-1 and 420-1) and the hinge housing 445-1.

In one embodiment, as the connecting body 430-1 is formed as a single body with the housing structure (e.g., 410-1 and 420-1), the process of producing and transporting the connecting body 430-1 separately and coupling it to the housing structure (e.g., 410-1 and 420-1) during the manufacturing of the electronic device 401-1 may be omitted, improving the manufacturing efficiency and yield of the electronic device 401-1.

In one embodiment, as the connecting body 430-1 is formed as a single body with the housing structure (e.g., 410-1 and 420-1), the electronic device 401-1 may omit a supporting region (e.g., the supporting region 450 of FIGS. 4A, 4B, 4C, 4D, 4E, 5A, 5B, 5C, 5D, 5E, and 6B), improving the spatial efficiency of the electronic device 401-1 and providing manufacturing efficiency thereof.

In one embodiment, when viewed in a direction of a folding axis (e.g., in the Y-axis direction), the connecting body 430-1 and the protruding region 447-1 may include an overlapping area O where they overlap each other while the electronic device 401-1 is at least partially unfolded.

For example, in the unfolded state of the electronic device 401 (e.g., the state shown in FIG. 7B), the connecting body 430-1 and the protruding region 447-1 may include an overlapping area O where they overlap each other. As the electronic device 401-1 is gradually folded, the size of the overlapping areas O may decrease gradually.

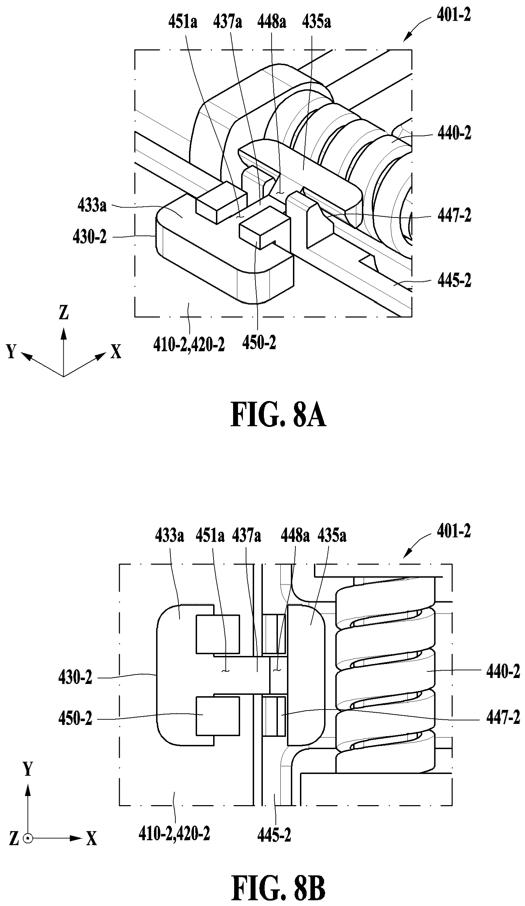

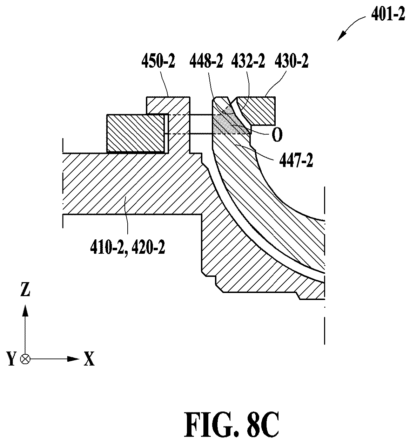

FIG. 8A is a perspective view of a partial configuration of an electronic device 401-2 according to an embodiment, FIG. 8B is a top view of the electronic device 401-2 according to an embodiment, and FIG. 8C is a cross-sectional view of the electronic device 401-2 according to an embodiment.

Referring to FIGS. 8A, 8B, and 8C, according to one embodiment, the electronic device 401-2 (e.g., the electronic device 401 of FIGS. 4A, 4B, 4C, 4D, 4D, 4E, 5A, 5B, 5C, 5D, 5E, and 6B, or the electronic device 401-1 of FIGS. 7A and 7B) may include a connecting body 430-2 (e.g., the connecting body 430 of FIGS. 4A, 4B, 4C, 4D, 4E, 5A, 5B, 5C, 5D, 5E, and 6B, or the connecting body 430-1 of FIGS. 7A and 7B), a protruding region 447-2 (e.g., the protruding region 447 of FIGS. 4A, 4B, 4C, 4D, 4E, 5A, 5B, 5C, 5D, 5E, and 6B, or the protruding region 447-1 of FIGS. 7A and 7B), and a supporting region 450-2 (e.g., the supporting region 450 of FIGS. 4A, 4B, 4C, 4D, 4E, 5A, 5B, 5C, 5D, 5E, and 6B).

Hereinafter, what has been described above is omitted, and it is to be noted that some configurations or components and structures may be substituted, added, or omitted in the electronic device 401-2 to the extent readily understood by those skilled in the art with reference to the accompanying drawings and the following description. It is also to be noted that at least one of the configurations or components and features described above according to the preceding embodiments may be combined in the electronic device 401-2, unless technically explicitly impossible.

In one embodiment, the electronic device 401-2 may include a housing structure (e.g., 410-2 and 420-2) (e.g., the housing structure (e.g., 410 and 420) of FIGS. 4A, 4B, 4C, 4D, 4E, 5A, 5B, 5C, 5D, 5E, 6A, and 6B, or the housing structure (e.g., 410-1 and 420-1) of FIGS. 7A and 7B), a hinge assembly 440-2 (e.g., the hinge assembly 440 of FIGS. 4A, 4B, 4C, 4D, 4E, 5A, 5B, 5C, 5D, 5E, and 6B, or the hinge assembly 440-1 of FIGS. 7A and 7B), and a hinge housing 445-2 (e.g., the hinge housing 445 of FIGS. 4A, 4B, 4C, 4D, 4E, 5A, 5B, 5C, 5D, 5E, 6A, and 6B, or the hinge housing 445-1 of FIGS. 7A and 7B). The housing structure (e.g., 410-2 and 420-2), the hinge assembly 440-2, and the hinge housing 445-2 may be applicable to the electronic device 401-2 in substantially the same or similar way as what has been described above regarding the electronic device 401-1 according to the preceding embodiments.

In one embodiment, the protruding region 447-2 may include a supporting groove 448a. The supporting groove 448a may receive therein the connecting body 430-2, in the unfolded state. When viewed in a direction of a folding axis A, the connecting body 430-2 may be spaced from the supporting groove 448a of the protruding region 447-2 in the folded state and may overlap the supporting groove 448a of the protruding region 447-2 in the unfolded state. For example, the connecting body 430-2 may be inserted, coupled, fastened, or connected to, or disposed to face the supporting groove 448a, in the unfolded state.

In one embodiment, in the unfolded state, the supporting groove 448a may limit a range of movement of the connecting body 430-2 or may limit the movement of the connecting body 430-2. The connecting body 430-2 may be disposed in, connected to, supported by, or secured to a housing portion. The supporting groove 448a may limit the movement of the connecting body 430-2, thereby reducing or preventing the movement of the housing structure (e.g., 410-2 and 420-2).

In one embodiment, the connecting body 430-2 may include a first extending region 433a facing the housing structure (e.g., 410-2 and 420-2), a second extending region 435a facing the hinge housing 445-2, and an elongated region 437a extending from the first extending region 433a to the second extending region 435a. The elongated region 437a may be a region where, in the unfolded state, the connecting body 430-2 overlaps the supporting groove 448a.

In one embodiment, the supporting region 450-2 may include a fastening groove 451a. The connecting body 430-2 may be inserted into the fastening groove 451a. Specifically, in and embodiment, the elongated region 437a may be inserted into the fastening groove 451a. The fastening groove 451a may support the connecting body 430-2 by connecting, securing, or fastening the connecting body 430-2 to the housing structure (e.g., 410-2 and 420-2). The fastening groove 451a of the supporting region 450-2 may be used to limit the movement of the connecting body 430-2 in a certain direction.

In one embodiment, in the unfolded state, the elongated region 437a may overlap the supporting groove 448a, and the second extending region 435a may be disposed to face the protruding region 447-2. The supporting groove 448a may limit the range of movement of the connecting body 430-2 or may reduce or prevent the movement of the connecting body 430-2, in the unfolded state.

In one embodiment, the elongated region 437a of the connecting body 430-2 may be disposed to overlap the supporting groove 448a of the protruding region 447-2, in the unfolded state, and the protruding region 447-2 may thus limit the movement of the connecting body 430-2. As the movement of the connecting body 430-2 is limited, the movement of the housing structure (e.g., 410-2 and 420-2) may also be limited, which may reduce or prevent breakage of the foldable electronic device 401-2 and may provide durability of the electronic device 401-2.

In one embodiment, the elongated region 437a and the supporting groove 448a may overlap each other when viewed in the direction of the folding axis A in the unfolded state, but the elongated region 437a and the supporting groove 448a may not contact each other. Alternatively, the elongated region 437a and the supporting groove 448a may be spaced apart by a predetermined distance, in the unfolded state.

In one embodiment, the elongated region 437a and the supporting groove 448a may contact each other when the housing structure (e.g., 410-2 and 420-2) or the hinge housing 445-2 is moved by some factors such as impact, and may limit a relative movement of the housing structure (e.g., 410-2 and 420-2) relative to the hinge housing 445-2. In the unfolded state, the elongated region 437a and the supporting groove 448a may be spaced apart from each other, allowing the electronic device 401-2 to provide a smooth and stable folding operation.

In one embodiment, the connecting body 430-2 may include a first offset 448-2 (e.g., the first offset 448 of FIGS. 4C, 5A, 5B, 5C, 5D, 5E, and 6B). In one embodiment, the protruding region 447-2 may include a second offset 432-2 (e.g., the second offset 432 of FIGS. 4E, 5A, 5B, 5C, 5D, 5E, and 6B).

In one embodiment, when viewed in the direction of the folding axis (e.g., in the Y-axis direction), the connecting body 430-2 and the protruding region 447-2 may include an overlapping area O where they overlap each other while the electronic device 401-2 is at least partially unfolded.

For example, in the unfolded state of the electronic device 402 (e.g., the state shown in FIG. 8C), the connecting body 430-2 and the protruding region 447-2 may include an overlapping area O where they overlap each other. As the electronic device 401-2 is gradually folded, the size of the overlapping area O may decrease gradually.

According to an embodiment, an electronic device (401; 401-1; 401-2) includes: a housing structure (410, 420; 410-1, 420-1; 410-2, 420-2) including a first housing portion (410; 410-1; 410-2) and a second housing portion (420; 420-1; 420-2); a hinge assembly (440; 440-1; 440-2) connecting the first housing portion (410; 410-1; 410-2) and the second housing portion (420; 420-1; 420-2), and configured to be operable between a folded state in which the first housing portion (410; 410-1; 410-2) and the second housing portion (420; 420-1; 420-2) face each other relative to a folding axis (A) and an unfolded state in which the first housing portion (410; 410-1; 410-2) and the second housing portion (420; 420-1; 420-2) do not face each other; a first connecting body (430; 430-1; 430-2) disposed on the first housing portion (410; 410-1; 410-2); and a hinge housing (445; 445-1; 445-2) in which the hinge assembly (440; 440-1; 440-2) is partially disposed, including a first protruding region (447; 447-1; 447-2) provided at a position facing the first connecting body (430; 430-1; 430-2), in the unfolded state. Further, when viewed in a direction of the folding axis (A), the first connecting body (430; 430-1; 430-2) is spaced apart from the first protruding region (447; 447-1; 447-2) in the folded state and overlaps the first protruding region (447; 447-1; 447-2) in the unfolded state.

In one embodiment, the first connecting body (430; 430-1; 430-2) may limit a range of movement of the first protruding region (447; 447-1; 447-2) in the unfolded state to limit a relative movement of the first housing portion (410; 410-1; 410-2) and the hinge housing (445; 445-1; 445-2).

In one embodiment, the first connecting body (430; 430-1) may include an open region (431; 431-1) that receives therein the first protruding region (447; 447-1), in the unfolded state.

In one embodiment, the open region (431; 431-1) of the first connecting body (430; 430-1) may have the same width as the first protruding region (447; 447-1) along the folding axis (A).

In one embodiment, the first protruding region (447; 447-1; 447-2) may include a first offset (448; 448-1; 448-2) facing the open region (431; 431-1; 431-2) of the first connecting body (430; 430-1; 430-2), in the unfolded state. In one embodiment, the first connecting body (430; 430-1; 430-2) may include a second offset (432; 432-1; 432-2) facing the first offset (448; 448-1; 448-2), in the unfolded state.

In one embodiment, the first offset (448; 448-1; 448-2) and the second offset (432; 432-1; 432-2) may be disposed horizontally in at least some areas that face each other, in the unfolded state.

In one embodiment, the first offset (448; 448-1; 448-2) and the second offset (432; 432-1; 432-2) may be spaced apart with an equidistant interval therebetween in at least some areas that face each other, in the unfolded state.

In one embodiment, the housing structure (410, 420; 410-2, 420-2) may include a supporting region (450; 450-2) protruding from the housing structure (410, 420; 410-2, 420-2) to be fastened to the first connecting body (430; 430-2).

In one embodiment, the first connecting body (430) may include the open region (431). The supporting region 450 may be inserted into one end of the open region (431), and the first protruding region (447) may be inserted into another end of the open region (431), in the unfolded state.

In one embodiment, the supporting region (450) may include a first region (451) in a shape extending from the housing structure (410, 420) and a second region (452) bent from an end of the first region (451) in a direction receding away from the hinge housing (445). In one embodiment, the first connecting body (430) may be fastened to the supporting region (450) while engaging with the first region (451) and the second region (452).

In one embodiment, the first connecting body (430) may include: a first opposing region (433) facing the housing structure (410, 420); a second opposing region (435) facing the hinge housing (445); and a middle region (436) connecting the first opposing region (433) and the second opposing region (435), and having an ascending shape extending from the first opposing region (433) toward the second opposing region (435).

In one embodiment, the first connecting body (430-1) may be formed as a single body with the housing structure (410-1, 420-1) so as to be continuous from the housing structure (410-1, 420-1).

In one embodiment, the hinge assembly (440; 440-1; 440-2) may include first hinge portion (441) and a second hinge portion (442) that connect the first housing portion (410; 410-1; 410-2) and the second housing portion (420; 420-1; 420-2) and are spaced apart from each other in the direction of the folding axis (A). In one embodiment, the electronic device (401; 401-1; 401-2) may further include a connecting member (459) that electrically connects a component disposed in the first housing portion (410; 410-1; 410-2) and a component disposed in the second housing portion (420; 420-1; 420-2) and is disposed between the first hinge portion (441) and the second hinge portion (442). In one embodiment, the first connecting body (430; 430-1; 430-2) may be disposed between any one of the first hinge portion (441) and the second hinge portion (442) and the connecting member (459).

In one embodiment, the first protruding region (447-2) may include a supporting groove (448a) that receives therein the connecting body (430-2), in the unfolded state.

In one embodiment, the electronic device (401; 401-1; 401-2) may further include a second connecting body (430; 430-1; 430-2) disposed on the second housing portion (420; 420-1; 420-2). In one embodiment, the hinge housing (445; 445-1; 445-2) may further include a second protruding region (447; 447-1; 447-2) provided at a position facing the second connecting body (430; 430-1; 430-2), in the unfolded state. In one embodiment, when viewed in the direction of the folding axis (A), the second connecting body (430; 430-1; 430-2) may be spaced apart from the second protruding region (447; 447-1; 447-2) in the folded state and may overlap the second protruding region (447; 447-1; 447-2) in the unfolded state.

According to an embodiment, an electronic device (401; 401-1; 401-2) includes: a housing structure (410, 420; 410-1, 420-1; 410-2, 420-2) including a first housing portion (410; 410-1; 410-2) and a second housing portion (420; 420-1; 420-2); a hinge assembly (440; 440-1; 440-2) connecting the first housing portion (410; 410-1; 410-2) and the second housing portion (420; 420-1; 420-2), and configured to be operable between a folded state in which the first housing portion (410; 410-1; 410-2) and the second housing portion (420; 420-1; 420-2) face each other along a folding axis (A) and an unfolded state in which the first housing portion (410; 410-1; 410-2) and the second housing portion (420; 420-1; 420-2) do not face each other; a plurality of connecting bodies (430; 430-1; 430-2) including a first connecting body (430a) disposed on the first housing portion (410; 410-1; 410-2) and a second connecting body (430b) disposed on the second housing portion (420; 420-1; 420-2); and a hinge housing (445; 445-1; 445-2) in which the hinge assembly (440; 440-1; 440-2) is partially disposed, including a plurality of protruding regions (447; 447-1; 447-2) including a first protruding region (447a) provided at a position facing the first connecting body (430a) and a second protruding region (447b) provided at a position facing the second connecting body (430b), in the unfolded state. Further , when viewed in a direction of the folding axis (A), the plurality of connecting bodies (430; 430-1; 430-2) are disposed overlappingly with the plurality of protruding regions (447; 447-1; 447-2), respectively, in the unfolded state, and limit a movement of the housing structure (410, 420; 410-1, 420-1; 410-2, 420-2).

In one embodiment, the plurality of connecting bodies (430; 430-1; 430-2) may be spaced apart from the plurality of protruding regions (447; 447-1; 447-2), respectively, in the folded state.

In one embodiment, the plurality of connecting bodies (430; 430-1; 430-2) may each include an open region (431) that receives therein the plurality of protruding regions (447; 447-1; 447-2), respectively, in the unfolded state.

In one embodiment, the first housing portion (410; 410-1; 410-2) may include a first supporting region (450a) that is fastened to the first connecting body (430a). In one embodiment, the second housing portion (420; 420-1; 420-2) may include a second supporting region (450b) that is fastened to the second connecting body (430b).

In one embodiment, the plurality of connecting bodies (430-1) may be formed as a single body with the housing structure (410-1, 420-1) so as to be continuous with the housing structure (410-1, 420-1).

While the disclosure has been illustrated and described with reference to various embodiments, it will be understood that the various embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (401; 401-1; 401-2), comprising:
a housing structure (410, 420; 410-1, 420-1; 410-2, 420-2) comprising a first housing portion (410; 410-1; 410-2) and a second housing portion (420; 420-1; 420-2);
a hinge assembly (440; 440-1; 440-2) connecting the first housing portion (410; 410-1; 410-2) and the second housing portion (420; 420-1; 420-2), and configured to be operable between a folded state in which the first housing portion (410; 410-1; 410-2) and the second housing portion (420; 420-1; 420-2) face each other relative to a folding axis (A) and an unfolded state in which the first housing portion (410; 410-1; 410-2) and the second housing portion (420; 420-1; 420-2) do not face each other;
a first connecting body (430; 430-1; 430-2) disposed on the first housing portion (410; 410-1; 410-2); and
a hinge housing (445; 445-1; 445-2) in which the hinge assembly (440; 440-1; 440-2) is partially disposed, comprising a first protruding region (447; 447-1; 447-2) provided at a position facing the first connecting body (430; 430-1; 430-2), in the unfolded state,
wherein, when viewed in a direction of the folding axis (A), the first connecting body (430; 430-1; 430-2) is spaced apart from the first protruding region (447; 447-1; 447-2) in the folded state and overlaps the first protruding region (447; 447-1; 447-2) in the unfolded state.

2. The electronic device (401; 401-1; 401-2) of claim 1, wherein the first connecting body (430; 430-1; 430-2) limits a range of movement of the first protruding region (447; 447-1; 447-2) in the unfolded state to limit a relative movement of the first housing portion (410; 410-1; 410-2) and the hinge housing (445; 445-1; 445-2).

3. The electronic device (401; 401-1) of claim 1 or 2, wherein the first connecting body (430; 430-1) comprises:
an open region (431; 431-1) that receives therein the first protruding region (447; 447-1), in the unfolded state.

4. The electronic device (401; 401-1) of any one of claims 1 to 3, wherein the open region (431; 431-1) of the first connecting body (430; 430-1) has the same width as the first protruding region (447; 447-1) along the folding axis (A).

5. The electronic device (401; 401-1; 401-2) of any one of claims 1 to 4, wherein the first protruding region (447; 447-1; 447-2) comprises a first offset (448; 448-1; 448-2) facing the open region (431; 431-1; 431-2) of the first connecting body (430; 430-1; 430-2), in the unfolded state, and
the first connecting body (430; 430-1; 430-2) comprises a second offset (432; 432-1; 432-2) facing the first offset (448; 448-1; 448-2), in the unfolded state.

6. The electronic device (401; 401-1; 401-2) of any one of claims 1 to 5, wherein the first offset (448; 448-1; 448-2) and the second offset (432; 432-1; 432-2) are disposed horizontally in at least some areas that face each other, in the unfolded state.

7. The electronic device (401; 401-1; 401-2) of any one of claims 1 to 6, wherein the first offset (448; 448-1; 448-2) and the second offset (432; 432-1; 432-2) are spaced apart with an equidistant interval therebetween in at least some areas that face each other, in the unfolded state.

8. The electronic device (401; 401-2) of any one of claims 1 to 7, wherein the housing structure (410, 420; 410-2, 420-2) comprises a supporting region (450; 450-2) protruding from the housing structure (410, 420; 410-2, 420-2) to be fastened to the first connecting body (430; 430-2).

9. The electronic device (401) of any one of claims 1 to 8, wherein the first connecting body (430) comprises the open region (431),
wherein the supporting region 450 is inserted into one end of the open region (431), and
the first protruding region (447) is inserted into another end of the open region (431), in the unfolded state.

10. The electronic device (401) of any one of claims 1 to 9, wherein the supporting region (450) comprises a first region (451) in a shape extending from the housing structure (410, 420) and a second region (452) bent from an end of the first region (451) in a direction receding away from the hinge housing (445), and
the first connecting body (430) is fastened to the supporting region (450) while engaging with the first region (451) and the second region (452).

11. The electronic device (401) of any one of claims 1 to 10, wherein the first connecting body (430) comprises:
a first opposing region (433) facing the housing structure (410, 420);
a second opposing region (435) facing the hinge housing (445); and
a middle region (436) connecting the first opposing region (433) and the second opposing region (435), and having an ascending shape extending from the first opposing region (433) toward the second opposing region (435).

12. The electronic device (401-1) of any one of claims 1 to 11, wherein the first connecting body (430-1) is formed as a single body with the housing structure (410-1, 420-1) so as to be continuous from the housing structure (410-1, 420-1).

13. The electronic device (401; 401-1; 401-2) of any one of claims 1 to 12, wherein the hinge assembly (440; 440-1; 440-2) comprises a first hinge portion (441) and a second hinge portion (442) that connect the first housing portion (410; 410-1; 410-2) and the second housing portion (420; 420-1; 420-2) and are spaced apart from each other in the direction of the folding axis (A),
the electronic device (401; 401-1; 401-2) further comprising:
a connecting member (459) that electrically connects a component disposed in the first housing portion (410; 410-1; 410-2) and a component disposed in the second housing portion (420; 420-1; 420-2) and is disposed between the first hinge portion (441) and the second hinge portion (442),
wherein the first connecting body (430; 430-1; 430-2) is disposed between any one of the first hinge portion (441) and the second hinge portion (442) and the connecting member (459).

14. The electronic device (401-2) of any one of claims 1 to 13, wherein the first protruding region (447-2) comprises:
a supporting groove (448a) that receives therein the connecting body (430-2), in the unfolded state.

15. The electronic device (401; 401-1; 401-2) of any one of claims 1 to 14, further comprising:
a second connecting body (430; 430-1; 430-2) disposed on the second housing portion (420; 420-1; 420-2),
wherein the hinge housing (445; 445-1; 445-2) further comprises:
a second protruding region (447; 447-1; 447-2) provided at a position facing the second connecting body (430; 430-1; 430-2), in the unfolded state,
wherein, when viewed in the direction of the folding axis (A), the second connecting body (430; 430-1; 430-2) is spaced apart from the second protruding region (447; 447-1; 447-2) in the folded state and overlaps the second protruding region (447; 447-1; 447-2) in the unfolded state.
